# EUROPÄISCHE PATENTSCHRIFT

(11) **EP 3 915 815 B1**
(45) Veröffentlichungstag und Bekanntmachung des Hinweises auf die Patenterteilung: **19.07.2023**
(21) Anmeldenummer: 21173430.6
(22) Anmeldetag: 11.05.2021
(51) Int. Cl.: B60H 1/00, B60H 1/32

(54) **VERBESSERTES KÜHL- UND HEIZGERÄT FÜR EIN FAHRZEUG SOWIE SYSTEM UND FAHRZEUG DAMIT UND VERFAHREN DAZU**
IMPROVED COOLING AND HEATING DEVICE FOR A VEHICLE AND SYSTEM AND VEHICLE INCLUDING THE SAME AND METHOD
APPAREIL AMÉLIORÉ DE REFROIDISSEMENT ET DE CHAUFFAGE POUR UN VÉHICULE, AINSI QUE SYSTÈME ET VÉHICULE CORRESPONDANTS ET PROCÉDÉ ASSOCIÉ

(30) Priorität: 29.05.2020 DE 102020114555
(43) Veröffentlichungstag der Anmeldung: 01.12.2021
(73) Patentinhaber: Konvekta Aktiengesellschaft, 34613 Schwalmstadt-Ziegenhain (DE)
(72) Erfinder: Sonnekalb, Michael, 34613 Schwalmstadt (DE); Best, Pascal, 34633 Ottrau (DE); Schmerer, René, 34626 Neukirchen (DE)
(74) Vertreter: Lindinger, Bernhard

(56) Entgegenhaltungen:
- CN-U- 209 274 301
- DE-A1- 19 528 776
- DE-A1-102009 060 860
- JP-A- 2008 308 080
- US-A1- 2020 139 789

## Beschreibung

### Gebiet der Technik:

Die Erfindung betrifft ein Kühl- und Heizgerät für ein Fahrzeug, wobei das Kühl- und Heizgerät einen Kältemittelkreis, der einen elektrisch betreibbaren Verdichter, einen als Kondensator/Gaskühler betreibbaren Flüssigkeits-Kältemittel-Wärmetauscher, ein Expansionsorgan und einen als Verdampfer betreibbaren Luft-Kältemittel-Wärmetauscher umfasst, sowie Anschlüsse ausgebildet zum Anschließen des Flüssigkeits-Kältemittel-Wärmetauscher auch an einen Flüssigkeitskreis umfasst.

Bei einem üblichen Kältemittelkreis strömt im Kreislauf vom Verdichter komprimiertes warmes Kältemittel zum Kondensator/Gaskühler, in dem es Wärme abgibt, weiter durch das Expansionsorgan, in dem das Kältemittel expandiert und dabei abkühlt, und danach durch den Verdampfer, in dem das Kältemittel Wärme aufnimmt, bis es dann schließlich durch den Saugeingang wieder in den Verdichter gelangt. Der Kondensator/Gaskühler ist entweder als ein Kondensator oder als ein Gaskühler ausgebildet. Sofern das Kältemittel wie beispielsweise CO2 überkritisch im Kondensator/Gaskühler betrieben wird, fungiert dieser als Gaskühler und bei Ausführungen, bei denen das Kältemittel wie beispielsweise R-1234yf nur unterkritisch betrieben wird, fungiert dieser als Kondensator. Ein derartiges Kühl- und Heizgerät ist in Betrieb an einen Flüssigkeitskreis angeschlossen und bildet mit den Komponenten des Flüssigkeitskreises zusammen ein Kühl- und Heizsystem. Die Erfindung betrifft ferner ein derartiges Kühl- und Heizsystem und außerdem ein Fahrzeug damit. In Betrieb wird bei zumindest einer Einstellung des Kühl- und Heizsystems die Flüssigkeit des Flüssigkeitskreises im als Kondensator/Gaskühler betreibbaren Flüssigkeits-Kältemittel-Wärmetauscher geheizt und die durch den als Verdampfer betreibbaren Luft-Kältemittel-Wärmetauscher strömende Luft gekühlt.

Des Weiteren betrifft die Erfindung ein Verfahren zum Steuern eines derartigen Kühl- und Heizsystems.

### Stand der Technik:

Bekannt sind einen Kältemittelkreis enthaltende Kühl- und Heizgeräte für Fahrzeuge, die an einen Flüssigkeitskreis anschließbar beziehungsweise angeschlossen sind. Ein Ausführungsbeispiel eines derartigen Geräts ist in Figur 7 von US 6,457,324 B2 offenbart. Es weist einen Kältemittelkreis auf, der einen elektrisch betreibbaren Verdichter, einen als Kondensator/Gaskühler betreibbaren Flüssigkeits-Kältemittel-Wärmetauscher, ein Expansionsorgan und einen als Verdampfer betreibbaren Luft-Kältemittel-Wärmetauscher umfasst. Der Flüssigkeits-Kältemittel-Wärmetauscher ist dabei an einen Flüssigkeitskreis mit einem Flüssigkeit-Luft-Wärmetauscher angeschlossen und bildet so ein entsprechendes System. Damit ist im als Verdampfer betreibbaren Luft-Kältemittel-Wärmetauscher die durch ihn strömende Luft zwar kühlbar aber nachteilig besteht dort nicht die Möglichkeit, die Luft aktiv zu erwärmen. Ein zusätzliches Heizgerät wäre zum Erwärmen dieser Luft die Folge, was entsprechenden Material- und Platzbedarf sowie Kostenaufwand verursacht. Die im Flüssigkeits-Kältemittel-Wärmetauscher erwärmte Flüssigkeit gibt in der in Figur 7 von US 6,457,324 B2 offenbarten Ausführung ihre Wärme ungenutzt nach außen ab. Eine Möglichkeit der Luftbehandlung auch bei ausgeschaltetem Kältemittelkreis ist bei der dortigen Ausführung nicht vorgesehen. Sie ist unzureichend flexibel einsetzbar. DE 198 55 309 A1 zeigt einen an einen Kältemittelkreis thermisch auf der Hochdruckseite gekoppelten Heizungskreis.

In WO 2018/185415 A1 als auch in EP 3 628 516 A1 ist jeweils ein Heiz- und Kühlgerät für ein Fahrzeug offenbart, das sowohl einen Kältemittelkreis als auch einen daran über einen Flüssigkeit-Kältemittel-Wärmetauscher auf der Hochdruckseite thermisch gekoppelten Flüssigkeitskreis aufweist. Dabei strömt die Flüssigkeit bei Betrieb des Flüssigkeitskreises jedoch nachteilig immer durch den Flüssigkeit-Kältemittel-Wärmetauscher und mindestens einen weiteren Flüssigkeits-Luft-Wärmetauscher des einen Heiz- und Kühlgeräts.

In DE 43 18 255 A1 ist ein Heiz- und Kühlgerät für ein Fahrzeug offenbart, das sowohl einen Kältemittelkreis als auch einen daran über einen Flüssigkeit-Kältemittel-Wärmetauscher auf der Hochdruckseite thermisch gekoppelten Flüssigkeitskreis umfasst. Dabei strömt die Flüssigkeit bei Betrieb des Flüssigkeitskreises jedoch nachteilig immer durch einen zur Erfassung der Abwärme des Antriebs vorgesehenen Wärmetauscher des einen Heiz- und Kühlgeräts. Ferner weist in DE 43 18 255 A1 der Kältemittelkreis zusätzlich zum Verdampfer noch einen zweiten Luft-Kältemittel-Wärmetauscher auf, der nur als Kondensator betreibbar ist, was nachteilig eine Erhöhung des Gewichts und des Materialaufwandes bewirkt.

DE 10 2018 117 097 A1 zeigt ein Klimatisierungssystem, das sowohl einen Kältemittelkreis als auch einen daran über einen Flüssigkeit-Kältemittel-Wärmetauscher thermisch gekoppelten Flüssigkeitskreis aufweist. Jedoch wird dort der Flüssigkeit-Kältemittel-Wärmetauscher lediglich als Verdampfer betrieben, in dem die Flüssigkeit nur gekühlt werden kann.

In DE 10 2009 060 860 A1 ist ein Klimatisierungssystem für ein Fahrzeug zum temperieren eines Fahrzeuginnenraums offenbart, das einen Kältemittelkreis und einen daran sowohl hochdruckseitig als auch niederdruckseitig thermisch koppelbaren Temperierkreislauf mit Kühlmittel aufweist.

Der im Anspruch 1 angegebenen Erfindung liegt also das Problem zugrunde, ein verbessertes, wie insbesondere hinsichtlich der Flexibilität bei der Luftbehandlung verbessertes, einen Kältemittelkreis enthaltendes Kühl- und Heizgerät für ein Fahrzeug bereitzustellen.

Ein entsprechendes Problem liegt auch der Bereitstellung eines Kühl- und Heizsystems mit einem derartigen Kühl- und Heizgerät zugrunde.

Ferner liegt ein entsprechendes Problem auch der Bereitstellung eines Fahrzeugs mit einem solchen Kühl- und Heizsystem zugrunde.

Des Weiteren liegt der im unabhängigen Verfahrensanspruch angegebenen Erfindung ein entsprechendes Problem zur Steuerung eines Kühl- und Heizsystems bei einem Fahrzeug zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass das Kühl- und Heizgerät für ein Fahrzeug, wobei das Kühl- und Heizgerät einen Kältemittelkreis, der einen elektrisch betreibbaren Verdichter, einen als Kondensator/Gaskühler betreibbaren Flüssigkeits-Kältemittel-Wärmetauscher, mindestens ein Expansionsorgan und einen einzigen Luft-Kältemittel-Wärmetauscher (11), wobei der als Verdampfer betreibbar ist, umfasst, sowie Anschlüsse ausgebildet zum Anschließen des Flüssigkeit-Kältemittel-Wärmetauschers auch an einen Flüssigkeitskreis umfasst, wobei das Kühl- und Heizgerät einen einzigen Flüssigkeit-Luft-Wärmetauscher (10) aufweist, das Kühl- und Heizgerät einen Bypass zum für einen Flüssigkeitskreis vorgesehenen Bereich des Flüssigkeits-Kältemittel-Wärmetauschers und/oder zu einem wärmetauscherfreien anderen Bereich der für einen Flüssigkeitskreis vorgesehenen Flüssigkeitsleitung des Kühl- und Heizgeräts aufweist, das Kühl- und Heizgerät zumindest ein erstes Ventil eingerichtet zum Öffnen und zum Schließen des Bypasses aufweist, und im Bypass der Flüssigkeit-Luft-Wärmetauscher angeordnet ist, wobei der Flüssigkeit-Luft-Wärmetauscher derart ausgebildet ist, dass dort bei durch den Bypass strömender Flüssigkeit und bei durch den Flüssigkeit-Luft-Wärmetauscher strömender Luft zwischen der Flüssigkeit und der Luft Wärme übertragbar ist, und die für die Luftförderung durch den Luft-Kältemittel-Wärmetauscher vorgesehene Luftfördereinrichtung auch für die Luftförderung durch den Flüssigkeit-Luft-Wärmetauscher vorgesehen ist, wobei der Luftströmungsweg sowohl durch den Luft-Kältemittel-Wärmetauscher als auch durch den Flüssigkeit-Luft-Wärmetauscher verläuft, wird das Problem gelöst.

Die für einen Flüssigkeitskreis vorgesehene Flüssigkeitsleitung mit integriertem Bereich des Flüssigkeits-Kältemittel-Wärmetauschers verläuft von Anschluss zu Anschluss für einen Flüssigkeitskreis.

Ein Bypass zu einem Bereich ist als Umgehungszweig, durch den der Bereich umgangen werden kann, zu verstehen. Ein wärmetauscherfreier Bereich einer Flüssigkeitsleitung ist ein Flüssigkeitsleitungsbereich, der durch keinen Wärmetauscher verläuft. Ein solcher Flüssigkeitsleitungsbereich weist also keinen Wärmetauscher auf.

Die Erfindung hat insbesondere die Vorteile, dass das Kühl- und Heizgerät einen kompakten Aufbau hat und nicht nur zum Kühlen sondern auch zum Erwärmen von Luft einsetzbar ist, wobei es lediglich als Anschlüsse welche für einen Flüssigkeitskreis und für seine Stromversorgung, sofern es keine eigene Stromquelle besitzt, aufweist. Beim Heizen von Luft im Flüssigkeit-Luft-Wärmetauscher mit durch den Bypass strömender warmer Flüssigkeit bei angeschlossenem Flüssigkeitskreis kann der Kältemittelkreis des Kühl- und Heizgeräts ausgeschaltet sein, was Energie spart. Ein zusätzlicher Heizwärmetauscher ist entbehrlich, so dass Platz, Material und Kosten eingespart werden. Es besteht die Möglichkeit, im selben Luftstrom die Luft durch den Flüssigkeit-Luft-Wärmetauscher zu heizen und durch den Luft-Kältemittel-Wärmetauscher zu kühlen. Mit nur einer gemeinsamen Luftfördereinrichtung wird Platz und Material eingespart. Ferner wird ein Abtauen bei Vereisung des Luft-Kältemittel-Wärmetauschers verbessert. Eine Luftfördereinrichtung ist beispielsweise ein Axiallüfter oder ein Radiallüfter oder ein Doppelradiallüfter.

In den Unteransprüchen sind vorteilhafte Ausgestaltungen, Weiterbildungen und Verbesserungen des jeweiligen Gegenstandes der Erfindung angegeben.

Vorzugsweise sind bei einer Ausführungsform der Luft-Kältemittel-Wärmetauscher und der Flüssigkeit-Luft-Wärmetauscher zusammen als eine Einheit ausgebildet und über ein oder mehrere Wärmeleitelemente wärmeleitend miteinander verbunden. Damit ist ein Abtauen bei Vereisung des Luft-Kältemittel-Wärmetauschers mit durch den Flüssigkeit-Luft-Wärmetauscher strömender warmer Flüssigkeit noch effizienter. Als Wärmeleitelemente kämen beispielsweise lamellenförmig angeordnete Wärmeleitbleche in Betracht.

Gemäß einer vorteilhaften Ausführung des vorliegenden erfindungsgemäßen Kühl- und Heizgeräts umfasst es ein zweites Ventil vorgesehen zum Blockieren und zum Gewähren von Flüssigkeitsströmung durch den vom Bypass umgangenen Bereich. Damit ist der Flüssigkeit-Kältemittel-Wärmetauscher bei angeschlossenem Flüssigkeitskreis schaltbar, so dass die Wärmeabfuhr durch Flüssigkeit aus ihm aus- und anschaltbar ist. Ist das zweite Ventil geschlossen und das erste Ventil geöffnet kann im Kühl- und Heizgerät bei angeschlossenem Flüssigkeitskreis die Flüssigkeit nur durch den Bypass strömen, was die Heizwirkung im Flüssigkeit-Luft-Wärmetauscher erhöht. Vorzugsweise sind das erste Ventil und das zweite Ventil zusammen als ein Dreiwegeventil ausgebildet. Dieses ist eine kompakte Ausführung bei der alternativ zueinander entweder der Bypass oder der vom Bypass umgangene Bereich für Flüssigkeitsströmung offen ist. Bevorzugt ist/sind das erste Ventil und/oder das zweite Ventil derart ausgebildet, dass die Größe seiner/ihrer Durchlassöffnung/en regelbar ist/sind. Damit lassen sich die Volumenströme von Flüssigkeit bei angeschlossenem Flüssigkeitskreis steuern, was die Flexibilität der Luftbehandlung durch das Kühl- und Heizgeräts erhöht.

Nach einer vorteilhaften Ausführungsform des Kühl- und Heizgeräts ist/sind die Leistung des elektrisch betreibbaren Verdichters und/oder die Durchlassöffnung des Expansionsorgans und/oder die Drehzahl des elektrisch betreibbaren Motors der dem Kältemittel-Luft-Wärmetauscher sowie dem Flüssigkeit-Luft-Wärmetauscher zugeordneten Luftfördereinrichtung regelbar. Dieses erhöht die Flexibilität der Luftbehandlung insbesondere beim Betrieb des Kältemittelkreises.

Gemäß einer vorteilhaften Weiterbildung des erfindungsgemäßen Kühl- und Heizgeräts ist der Kältemittelkreis umschaltbar derart ausgebildet, dass der Flüssigkeit-Kältemittel-Wärmetauscher auch als Verdampfer und der Luft-Kältemittel-Wärmetauscher auch als Kondensator/Gaskühler betreibbar sind. Dadurch ist es möglich, dass mittels des Kältemittelkreises nicht nur Luft kühlbar und Flüssigkeit heizbar sondern umgekehrt Flüssigkeit bei angeschlossenem Flüssigkeitskreis kühlbar und Luft heizbar ist. Dieses erhöht die Flexibilität des Kühl- und Heizgeräts für die Luftbehandlung und auch für eine thermische Behandlung von Flüssigkeit bei angeschlossenem Flüssigkeitskreis. Im Flüssigkeit-Luft-Wärmetauscher kann bei Flüssigkeitsströmung durch den dadurch verlaufenden Bypass die Flüssigkeit auch mit Luft gekühlt werden. Nach einer vorteilhaften Ausführungsform weis(t)/en der Flüssigkeit-Kältemittel-Wärmetauscher und/oder der Luft-Kältemittel-Wärmetauscher getrennte Kältemittelleitungen zum einen für den Betrieb als Kondensator/Gaskühler und zum andern für den Betrieb als Verdampfer auf. Damit ist auch ein Mischbetrieb zwischen Verdampfer- und Kondensatorfunktion bei dem jeweiligen Wärmetauscher realisierbar, was die Flexibilität der Luft- und Flüssigkeitsbehandlung durch das Kühl- und Heizgeräts erhöht.

Gemäß einer vorteilhaften Ausführungsform des erfindungsgemäßen Kühl- und Heizgeräts umfasst es eine derart ausgebildete Regelung, mit der das erste Ventil und/oder gegebenenfalls das zweite Ventil und/oder die Leistung des elektrisch betreibbaren Verdichters und/oder das Ein- und Ausschalten sowie gegebenenfalls auch Umschalten des Kältemittelkreises und/oder das Expansionsorgan und/oder die dem Kältemittel-Luft-Wärmetauscher sowie dem Flüssigkeit-Luft-Wärmetauscher zugeordnete Luftfördereinrichtung regelbar ist/sind. Mit einer derartigen Regelung lässt sich die Luft- und Flüssigkeitsbehandlung durch das Kühl- und Heizgerät automatisch steuern.

Das der im Anspruch 8 hinsichtlich eines Kühl- und Heizsystems angegebenen Erfindung zugrundeliegende Problem wird durch die im Anspruch 8 aufgeführten Merkmale gelöst. Dadurch, dass das Kühl- und Heizsystem für ein Fahrzeug, zumindest ein erfindungsgemäßes erstes Kühl- und Heizgerät umfasst, wobei das Kühl- und Heizsystem wenigstens einen an die Anschlüsse des ersten Kühl- und Heizgeräts angeschlossenen Flüssigkeitskreis mit wenigstens einer Pumpe eingerichtet für Zirkulation einer Flüssigkeit im Flüssigkeitskreis umfasst, und das Kühl- und Heizsystem wenigsten ein weiteres an den Flüssigkeitskreis angeschlossenes Kühl- und Heizgerät und/oder wenigstens eine an den Flüssigkeitskreis angeschlossene Flüssigkeit-Luft-Wärmetauscher-Einheit umfasst, wird das Problem gelöst.

Eine Flüssigkeit-Luft-Wärmetauscher-Einheit ist eine Einheit, die zwar einen Flüssigkeit-Luft-Wärmetauscher aber keinen Kältemittelkreis umfasst.

Ein derartiges System hat insbesondere den Vorteil, dass die im kompakten erfindungsgemäßen ersten Kühl- und Heizgerät im Luftkühlbetrieb abzuführende Wärme durch den Flüssigkeitskreis einfach nach außen abführbar ist und aber auch der Flüssigkeitskreis bei von ihm abgekoppelten oder ausgeschaltetem Kältemittelkreis des ersten Kühl- und Heizgeräts zur Erwärmung der beispielsweise zuvor gekühlten Luft im Flüssigkeit-Luft-Wärmetauscher mit durch den Bypass strömender Flüssigkeit einsetzbar ist. Ein zusätzlicher Heizwärmetauscher zur Erwärmung der Luft ist entbehrlich, so dass Platz, Material und Kosten eingespart werden. Auch ein Abtauen bei Vereisung des Luft-Kältemittel-Wärmetauscher ist damit effizienter. Die Flüssigkeit des Flüssigkeitskreises ist durch den Kältemittelkreis im Kühl- und Heizgerät heizbar. Ein Flüssigkeitskreis lässt sich weniger aufwendig als ein Kältemittelkreis betreiben. Ein Kältemittelkreis befindet sich lediglich kompakt im Kühl- und Heizgerät. Damit sind die Kältemittelmenge und die Gefahr einer Leckage gering. Für den Wärmetransport über weite Distanzen im Fahrzeug lässt sich vorteilhaft der Flüssigkeitskreis einsetzen. Die Montage ist einfach. Kühl- und Heizgeräte sind vorgefertigte Einheiten die lediglich an die Stromversorgung und den Flüssigkeitskreis anzuschließen sind.

Vorzugsweise ist der Flüssigkeitskreis für die Zirkulation von Wasser oder von einem Wasser-Glykol-Gemisch als Flüssigkeit in ihm ausgebildet. Diese Flüssigkeiten eignen sich gut als Wärmeträger und sind kostengünstig und einfach zu handhaben.

Nach einer vorteilhaften Ausführungsform des erfindungsgemäßen Kühl- und Heizsystems umfasst der Flüssigkeitskreis zumindest eine Flüssigkeit-Luft-Wärmetauscher-Einheit und dazu einen Bypass sowie zumindest ein Ventil eingerichtet zum Öffnen und zum Schließen des jeweiligen Bypasses, und zumindest eine der wenigstens einen an den Flüssigkeitskreis (35) angeschlossenen Flüssigkeit-Luft-Wärmetauscher-Einheit (61) ist für das Heizen von Luft ausgebildet. Damit ist Wärme aus der Flüssigkeit einerseits gut an Luft abführbar und anderseits bei Bypass-Schaltung in der Flüssigkeit haltbar. Dieses erhöht die Flexibilität des Kühl- und Heizsystems. Dadurch ist eine einfache Ausführung einer Heizung von Luft einer Fahrer- und/oder Fahrgastkabine gegeben. Die durch den Kältemittelkreis erwärmbare Flüssigkeit im Flüssigkeitskreis kann so Wärme an Luft einer Fahrer- und/oder Fahrgastkabine abgeben. Sofern die Flüssigkeit durch den Kältemittelkreis auch abkühlbar ist, ist sie in der Flüssigkeit-Luft-Wärmetauscher-Einheit auch zum Kühlen von Luft einsetzbar.

Nach einer vorteilhaften Ausführungsform des erfindungsgemäßen Kühl- und Heizsystems ist das an den Flüssigkeitskreis angeschlossene erste Kühl- und Heizgerät als eine zwischen Kühlbetrieb und Wärmepumpenbetrieb umschaltbare Ausführung des erfindungsgemäßen Kühl- und Heizgeräts ausgebildet und das Kühl- und Heizsystem umfasst wenigstens ein weiteres an den Flüssigkeitskreis angeschlossenes Kühl- und Heizgerät, das als eine zwischen Kühlbetrieb und Wärmepumpenbetrieb nicht umschaltbare Ausführung des erfindungsgemäßen Kühl- und Heizgeräts ausgebildet ist, sowie eine Regelung, die derart ausgebildet ist, dass damit das Ein- und Ausschalten der Kältemittelkreisläufe der Kühl- und Heizgeräte sowie die Ventile des Flüssigkeitskreises einschließlich der ersten und gegebenenfalls zweiten Ventile der Kühl- und Heizgeräte und das Umschalten des Kältemittelkreises des ersten Kühl- und Heizgeräts regelbar sind. So ein Kühl- und Heizsystem lässt sich besonders gut und flexibel zum Kühlen und Heizen von Luft einsetzen. Die Reglung ermöglicht ein automatisches Steuern des Kühl- und Heizsystems. Vorzugsweise ist die Regelung derart ausgebildet, dass damit die Leistung der elektrisch betreibbaren Verdichter und/oder die Expansionsorgane und/oder die den Kältemittel-Luft-Wärmetauschern sowie dem Flüssigkeit-Luft-Wärmetauscher zugeordneten Luftfördereinrichtungen der Kühl- und Heizgeräte und/oder die Förderleistung der Pumpe des Flüssigkeitskreises regelbar sind. Damit ist ein besonders flexibles Steuern des Kühl- und Heizsystems möglich. Bei einer Anzahl von mindestens zwei der weiteren nicht zwischen Kühlbetrieb und Wärmepumpenbetrieb umschaltbaren Kühl- und Heizgeräte sind diese nach einer Ausführungsform vorteilhaft im Flüssigkeitskreis zueinander und zum ersten Kühl- und Heizgerät in Reihe geschaltet oder schaltbar, was eine einfache Nutzung der an die Flüssigkeit von einem Kühl- und Heizgerät abgegebenen Wärme durch das in Reihe folgende Kühl- und Heizgerät ermöglicht, wie beispielsweise zum Abtauen seines Kältemittel-Luft-Wärmetauschers. Gemäß einer anderen Ausführungsform sind die weiteren Kühl- und Heizgeräte mit nicht umschaltbarem Kältekreis im Flüssigkeitskreis zueinander parallel und zum ersten Kühl- und Heizgerät jeweils in Reihe geschaltet oder schaltbar. Dadurch ist die Flüssigkeitsströmung hinsichtlich der weiteren Kühl- und Heizgeräte gut aufteilbar, was die Flexibilität der Luftbehandlung insbesondere bei verschiedenen Räumen erhöht.

Nach einer vorteilhaften Ausführungsform des Kühl- und Heizsystems ist das erste Kühl- und Heizgerät ausgebildet, bei einem Fahrzeug derart angeordnet zu werden, dass durch den Flüssigkeit-Luft-Wärmetauscher und durch den Luft-Kältemittel-Wärmetauscher als Luft nur Luft von außen förderbar ist, und das wenigstens eine weitere Kühl- und Heizgerät ist ausgebildet, bei einem Fahrzeug derart angeordnet zu werden, dass durch den Flüssigkeit-Luft-Wärmetauscher und durch den Luft-Kältemittel-Wärmetauscher als Luft nur Luft in und/oder für wenigstens eine(m)/n Fahrzeuginnenraum förderbar ist. So kann das erste Kühl- und Heizgerät zum Kühlen der Flüssigkeit des Flüssigkeitskreises unter Wärmeabgabe an die Außenluft eingesetzt werden und die derart gekühlte Flüssigkeit zur Wärmeaufnahme bei den weiteren Kühl- und Heizgeräten, wenn diese Luft hinsichtlich wenigstens eines Fahrzeuginnenraums kühlen, genutzt werden. Die Flüssigkeit des Flüssigkeitskreises dient dabei dem Wärmetransport.

Das der im Anspruch 15 hinsichtlich eines Fahrzeugs angegebenen Erfindung zugrundeliegende Problem wird durch ein Fahrzeug mit einem erfindungsgemäßen Kühl- und Heizsystem und einem oder mehreren Temperatursensoren gelöst. Bezüglich der Vorteile und vorteilhafter Ausgestaltungen und Weiterbildungen und deren Vorzüge gelten entsprechend die obigen Angaben zum erfindungsgemäßen Kühl- und Heizsystem.

Nach einer vorteilhaften Ausführungsform umfasst das Kühl- und Heizsystem des Fahrzeugs eine außen am Fahrzeug angeordneten am Flüssigkeitskreis angeschlossenen Flüssigkeit-Luft-Wärmetauscher-Einheit. Darin ist die Flüssigkeit mit Außenluft kühlbar.

Vorzugsweise umfasst das Kühl- und Heizsystem des Fahrzeugs wenigstens eine in der Fahrer- und/oder Fahrgastkabine angeordnete am Flüssigkeitskreis angeschlossene Flüssigkeit-Luft-Wärmetauscher-Einheit. Diese ist dort zum Heizen der Kabinenluft mit warmer Flüssigkeit des Flüssigkeitskreises einsetzbar.

Bevorzugt ist die Luftfördereinrichtung bei der Flüssigkeit-Luft-Wärmetauscher-Einheit derart umschaltbar ausgebildet, dass bei Betrieb in dem Fahrzeug Luft aus der Fahrer- und/oder Fahrgastkabine durch die Flüssigkeit-Luft-Wärmetauscher-Einheit nach außen in die Umgebung strömt. Damit kann die Strömungsrichtung der Luft durch die Flüssigkeit-Luft-Wärmetauscher-Einheit umgeschaltet werden. So kann auch die Luft der Fahrer- und/oder Fahrgastkabine bei warmer Witterung statt geheizt zum Kühlen der Flüssigkeit benutzt werden, wie beispielsweise mit klimatisierter Luft der Fahrer- und/oder Fahrgastkabine.

Gemäß einer vorteilhaften Weiterbildung umfasst das Fahrzeug ein erfindungsgemäßes Kühl- und Heizsystem, wobei das erste Kühl- und Heizgerät, bei dem durch den Flüssigkeit-Luft-Wärmetauscher und durch den Luft-Kältemittel-Wärmetauscher nur Luft von außen förderbar ist, außen am Fahrzeug angeordnet ist und das/die weitere/n Kühl- und Heizgerät/e einzeln jeweils einem Fahrzeuginnenraum der ein oder mehreren Fahrzeuginnenräume des Fahrzeugs zugeordnet ist/sind, wobei durch den jeweiligen Flüssigkeit-Luft-Wärmetauscher und durch den jeweiligen Luft-Kältemittel-Wärmetauscher des weiteren Kühl- und Heizgeräts nur Luft in und/oder für wenigstens den jeweiligen Fahrzeuginnenraum förderbar ist. Damit sind die Fahrzeuginnenräume gut kühl- und heizbar, wobei der Wärmetransport über größere Distanzen im Fahrzeug vorteilhaft über die im Flüssigkeitskreis zirkulierende Flüssigkeit erfolgen kann. Besonders von Vorteil ist die Ausbildung des erfindungsgemäßen Fahrzeugs als ein Kühlfahrzeug, wobei das Kühl- und Heizsystem insbesondere zum Kühlen von Luft in einem oder in mehreren als Kühlraum/Kühlräume ausgebildeten Fahrzeuginnenraum/Fahrzeuginnenräumen eingerichtet ist.

Das der im Verfahrensanspruch 21 angegebenen Erfindung zugrundeliegende Problem wird durch ein Verfahren zum Steuern eines erfindungsgemäßen Kühl- und Heizsystems bei einem erfindungsgemäßen Fahrzeug mit den Schritten des Ermittelns eines Kühl- oder Heizbedarfs für wenigstens einen Fahrzeuginnenraum und bei ermitteltem Kühlbedarf des Kühlens von Luft für und/oder in dem wenigstens einen Fahrzeuginnenraum mit einem erfindungsgemäßen Kühl- und Heizgerät mithilfe dessen im Kühlbetrieb bezüglich der Luft eingeschalteten Kältemittelkreises sowie bei ermitteltem Heizbedarf des Heizens von Luft für und/oder in dem wenigstens einen Fahrzeuginnenraum mit warmer durch den Flüssigkeit-Luft-Wärmetauscher des erfindungsgemäßen Kühl- und Heizgeräts strömender Flüssigkeit des Flüssigkeitskreises bei abgeschaltetem Kältemittelkreis des Kühl- und Heizgeräts gelöst. Bei diesem Verfahren hat der Flüssigkeitskreis vorteilhaft eine Doppelfunktion, einerseits des Abführens von Wärme beim Kühlbedarf und anderseits des Zuführens von Wärme beim Heizbedarf. Mit dem Verfahren wird das Kühl- und Heizsystem bei einem Fahrzeug auf einfache Weise für das Temperieren der Luft eines Fahrzeuginnenraums gesteuert. Bezüglich weiterer Vorteile sowie vorteilhafter Ausgestaltungen und Weiterbildungen und deren Vorzüge gelten entsprechend die obigen Angaben zum erfindungsgemäßen Kühl- und Heizsystem und dem Fahrzeug damit.

Vorzugsweise werden bei dem Verfahren für verschiedene mit einem Kühl- und Heizgerät versehene Fahrzeuginnenräume des Fahrzeugs jeweils der Heiz- oder Kühlbedarf ermittelt und entsprechend das Kühlen und Heizen der Luft des jeweiligen Fahrzeuginnenraums geregelt. Dadurch können auf einfache Weise verschiedene Fahrzeuginnenräume eines Fahrzeugs unterschiedlich temperiert werden.

Gemäß einer vorteilhaften Weiterbildung des erfindungsgemäßen Verfahrens ist zumindest noch ein erfindungsgemäßes Kühl- und Heizgerät an den Flüssigkeitskreis des Kühl- und Heizsystems angeschlossen, das zwischen Kühlbetrieb und Wärmepumpenbetrieb umschaltbar ausgebildet und bei dem Fahrzeug derart angeordnet ist, dass durch den Flüssigkeit-Luft-Wärmetauscher und durch den Luft-Kältemittel-Wärmetauscher als Luft nur Luft von außen förderbar ist, und das Verfahren umfasst die weiteren Schritte des Ermittelns der Temperatur der Außenluft, des Kühlens erwärmter durch den Flüssigkeit-Luft-Wärmetauscher des Kühl- und Heizgeräts strömender Flüssigkeit des Flüssigkeitskreises bei abgeschaltetem Kältemittelkreis des Kühl- und Heizgeräts bei zum Kühlen ausreichend kalter Außenluft, des Kühlens erwärmter durch den Flüssigkeit-Kältemittel-Wärmetauscher des Kühl- und Heizgeräts strömender Flüssigkeit des Flüssigkeitskreises mithilfe des im Kühlbetrieb bezüglich der Flüssigkeit geschalteten Kältemittelkreises des Kühl- und Heizgeräts bei zum Kühlen nicht ausreichend kalter Außenluft, oder des Heizens von durch den Flüssigkeit-Kältemittel-Wärmetauscher des Kühl- und Heizgeräts strömender Flüssigkeit des Flüssigkeitskreises mithilfe des im Wärmepumpenbetrieb geschalteten Kältemittelkreises des Kühl- und Heizgeräts beim Heizen von Luft für oder in zumindest einem Fahrzeuginnenraum mit der geheizten Flüssigkeit in einem im Verfahren dafür vorgesehenen erfindungsgemäßen Kühl- und Heizgerät. Dieses Verfahren steuert ein besonders gut zum Kühlen und Heizen der Luft von zumindest einem Fahrzeuginnenraum eingerichtetes erfindungsgemäßes Kühl- und Heizsystem.

Nach einer Weiterbildung des erfindungsgemäßen Verfahrens werden zum Abtauen insbesondere des Luft-Kältemittel-Wärmetauschers eines in einem Fahrzeuginnenraum angeordneten Kühl- und Heizgeräts dessen zuvor zum Kühlen der Luft im Fahrzeuginnenraum angeschalteter Kältemittelkreis ausgeschaltet, das erste Ventil geöffnet sowie das zweite Ventil geschlossen und die zuvor beim Kühlen der Luft im Fahrzeuginnenraum im Flüssigkeit-Kältemittel-Wärmetauscher erwärmte Flüssigkeit durch den Bypass gepumpt. Dadurch wird effizient die beim Kühlen der Innenluft erwärmte Flüssigkeit für das Abtauen bei Vereisung insbesondere des Luft-Kältemittel-Wärmetauschers genutzt.

Vorzugsweise werden im Verfahren bezüglich des jeweiligen Kühl- und Heizgeräts das erste Ventil und gegebenenfalls das zweite Ventil und das Ein- und Ausschalten sowie gegebenenfalls auch Umschalten des Kältemittelkreises und/oder die Leistung des elektrisch betreibbaren Verdichters und/oder das Expansionsorgan und/oder die dem Luft-Kältemittel-Wärmetauscher zugeordnete Luftfördereinrichtung sowie bezüglich des Flüssigkeitskreises dessen Ventile und/oder die Förderleistung der Pumpe geregelt. Auf diese Weise wird das Kühl- und Heizsystem flexibel automatisch gesteuert.

### Kurze Beschreibung der Zeichnungen:

Anhand der Zeichnungen werden Ausführungsbeispiele der Erfindung erläutert.

Es zeigen
Fig. 1 schematisch ein Ausführungsbeispiel eines Kühl- und Heizgeräts für ein Fahrzeug;
Fig. 2 schematisch ein weiteres Ausführungsbeispiel eines Kühl- und Heizgeräts für ein Fahrzeug;
Fig. 3 schematisch ein weiteres Ausführungsbeispiel eines Kühl- und Heizgeräts für ein Fahrzeug;
Fig. 4 schematisch ein Ausführungsbeispiel eines Kühl- und Heizsystems eines Fahrzeugs im Kühlbetrieb bei warmer Außenluft;
Fig. 5 schematisch das Ausführungsbeispiel eines Kühl- und Heizsystems von Fig. 4 im Kühlbetrieb bei kühler Außenluft;
Fig. 6 schematisch das Ausführungsbeispiel eines Kühl- und Heizsystems von Fig. 4 im Heizbetrieb;
Fig. 7 schematisch ein weiteres Ausführungsbeispiel eines Kühl- und Heizsystems eines Fahrzeugs;
Fig. 8 schematisch ein Ausführungsbeispiel eines Fahrzeugs mit einem Kühl- und Heizsystem;
Fig. 9 schematisch ein weiteres Ausführungsbeispiel eines Fahrzeugs mit einem Kühl- und Heizsystem; und
Fig. 10 ein Flussdiagramm zu einem Ausführungsbeispiel eines Verfahrens zum Steuern eines Kühl- und Heizsystems bei einem Fahrzeug.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet. In den Figuren bezeichnen gleiche Bezugszeichen gleiche oder im Wesentlichen funktionsgleiche Komponenten.

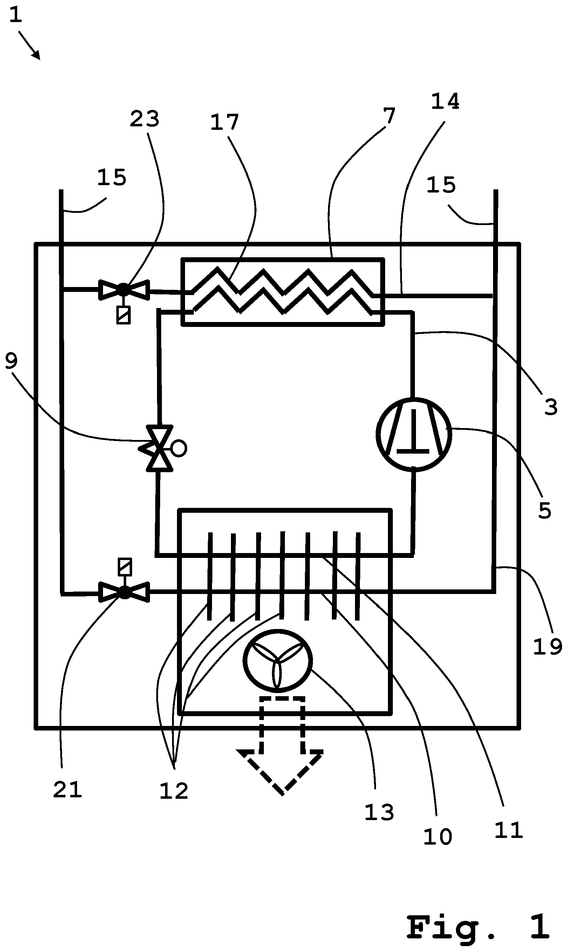

In Figur 1 ist ein Ausführungsbeispiel eines Kühl- und Heizgeräts 1 für ein Fahrzeug gezeigt. In dem Kühl- und Heizgerät 1 befindet sich ein Kältemittelkreis 3 mit im Kreislauf durch Kältemittelleitungen verbundenen elektrisch betreibbaren Verdichter 5, als Kondensator/Gaskühler betreibbaren Flüssigkeit-Kältemittel-Wärmetauscher 7, als Expansionsventil ausgebildeten Expansionsorgan 9 und als Verdampfer betreibbaren Luft-Kältemittel-Wärmetauscher 11. Der elektrisch betreibbare Verdichter 5 lässt sich ein- und ausschalten, so dass der Kältemittelkreis 3 dadurch ein- und ausschaltbar ist. Das Kältemittel im Kältemittelkreis 3 ist in diesem Fall CO2 und für den überkritischen Betrieb vorgesehen. Denkbar ist auch ein für den nur unterkritischen Betrieb eines Kältemittels wie R-1234yf ausgebildeter Kältemittelkreis 3. Der Luft-Kältemittel-Wärmetauscher 11 verfügt über eine elektrisch betreibbare Luftfördereinrichtung 13, mit der durch ihn und durch den Flüssigkeit-Luft-Wärmetauscher 10 Luft förderbar ist. Der Luftströmungsweg verläuft dabei sowohl durch den Luft-Kältemittel-Wärmetauscher 11 als auch durch den Flüssigkeit-Luft-Wärmetauscher 10. Bei Betrieb des Kältemittelkreises 5 wird die Luft dort gekühlt. Die Luftfördereinrichtung 13 ist beispielsweise ein Axiallüfter oder Radiallüfter. Der Luft-Kältemittel-Wärmetauscher 11 und der Flüssigkeit-Luft-Wärmetauscher 10 sind zusammen als eine Einheit ausgebildet und über mehrere lamellenförmig angeordnete als Wärmeleitbleche ausgebildete Wärmeleitelemente 12 wärmeleitend miteinander verbunden.

Ferner weist das Kühl- und Heizgerät 1 Anschlüsse 15 ausgebildet zum Anschließen an einen Flüssigkeitskreis auf. Damit ist der Flüssigkeits-Kältemittel-Wärmetauscher 7 an einen Flüssigkeitskreis anschließbar. Der Flüssigkeits-Kältemittel-Wärmetauscher 7 verfügt also über einen für die Integration in einen Flüssigkeitskreis vorgesehenen Bereich 17 als Bestandteil der Flüssigkeitsleitung 14. Dazu ist im Kühl- und Heizgerät 1 ein Bypass 19 angeordnet, durch den Flüssigkeit bei angeschlossenem Flüssigkeitskreis den Flüssigkeits-Kältemittel-Wärmetauscher 7 umgehen kann. Das Öffnen und Schließen des Bypasses 19 erfolgt mit dem ersten Ventil 21. Der Bypass 19 verläuft durch den Flüssigkeit-Luft-Wärmetauscher 10. Der Flüssigkeit-Luft-Wärmetauscher 10 ist also in Parallelschaltung zum Flüssigkeits-Kältemittel-Wärmetauscher 7 angeordnet, wobei mit dem ersten Ventil 21 und dem zweiten Ventil 23 beide einzeln im Flüssigkeitskreis zu- und abschaltbar sind.

Im Flüssigkeit-Luft-Wärmetauscher 10 ist der Bypass 19 mit von der Luftfördereinrichtung 13 geförderter Luft anströmbar, so dass bei durch den Bypass 19 strömender Flüssigkeit und bei durch den Flüssigkeit-Luft-Wärmetauscher 10 strömender Luft zwischen der Flüssigkeit und der Luft Wärme übertragbar ist. Im Fall von dort strömender warmer Flüssigkeit wird die dortige Luft damit geheizt. Das zweite Ventil 23 befindet sich direkt vor dem zum für einen Flüssigkeitskreis vorgesehenen Bereich 17 des Flüssigkeit-Kältemittel-Wärmetauschers 7. Bei Betrieb dient es im geschlossenen Zustand zum Blockieren einer Flüssigkeitsströmung durch diesen Bereich 17 und im offenen Zustand zum Gewähren einer solchen. Denkbar ist die Variante, dass das erste Ventil 21 und das zweite Ventil 23 zusammen als ein Dreiwegeventil ausgebildet sind. Der Flüssigkeit-Kältemittel-Wärmetauschers 7 ist ohne darauf beschränkt zu sein als Plattenwärmetauscher ausgebildet. Als Flüssigkeit ist dafür zum Beispiel Wasser oder ein Wasser-Glykol-Gemisch einsetzbar. Bei Betrieb des Kältemittelkreises 3 wird dort vom Kältemittel Wärme an die Flüssigkeit abgegeben. Denkbar ist eine Ausführung mit im Heiz- und Kühlgerät 1 integrierter Regelung, mit der das erste Ventil 21 und das zweite Ventil 23 und die Leistung des elektrisch betreibbaren Verdichters 5 und das Ein- und Ausschalten des Kältemittelkreises 3 und das Expansionsorgan 9 sowie die dem Kältemittel-Luft-Wärmetauscher 11 und dem Flüssigkeit-Luft-Wärmetauscher 10 zugeordnete Luftfördereinrichtung 13 regelbar sind.

Das Kühl- und Heizgerät 1 ist beispielsweise als Inneneinheit in einem Kühlraum eines Kühl- oder Pharmafahrzeugs einsetzbar.

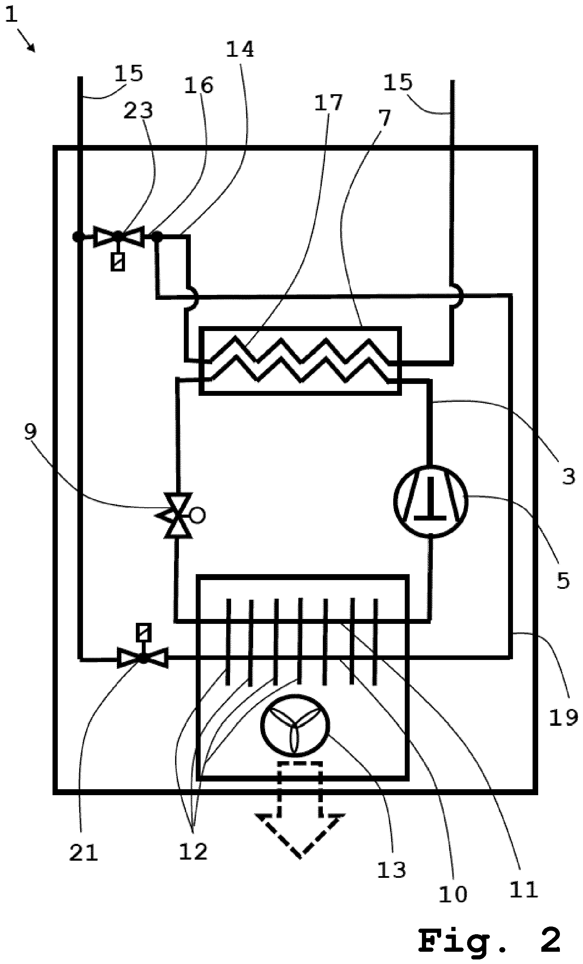

In Figur 2 ist ein weiteres Ausführungsbeispiel eines Kühl- und Heizgeräts 1 für ein Fahrzeug dargestellt. Es verfügt über gleiche mit denselben Bezugszeichen versehene Komponenten, wie das in Figur 1 gezeigte Ausführungsbeispiel. So befindet in dem Kühl- und Heizgerät 1 sich ein Kältemittelkreis 3 mit im Kreislauf durch Kältemittelleitungen verbundenen elektrisch betreibbaren Verdichter 5, als Kondensator/Gaskühler betreibbaren Flüssigkeit-Kältemittel-Wärmetauscher 7, als Expansionsventil ausgebildeten Expansionsorgan 9 und als Verdampfer betreibbaren Luft-Kältemittel-Wärmetauscher 11. Der elektrisch betreibbare Verdichter 5 lässt sich ein- und ausschalten, so dass der Kältemittelkreis 3 dadurch ein- und ausschaltbar ist. Als Kältemittel kommt auch hier CO2 infrage. Jedoch sind für einen Flüssigkeitskreis in diesem Fall der Flüssigkeit-Luft-Wärmetauscher 10 und der Luft-Kältemittel-Wärmetauscher 11 mit dem ersten Ventilen 21 und dem zweiten Ventil 23 in Reihe schaltbar. Der Flüssigkeits-Luft-Wärmetauscher 10 ist im Bypass 19 zu einem anderen Bereich 16 der für einen Flüssigkeitskreis vorgesehenen Flüssigkeitsleitung 14 als der Bereich 17 des Flüssigkeit-Kältemittel-Wärmetauscher 7 angeordnet. Der Bereich 16 ist ein wärmetauscherfreier Abschnitt der Flüssigkeitsleitung 14. Dieser andere Bereich 16 der Flüssigkeitsleitung 14 verläuft also nicht durch einen Wärmetauscher. Es ist denkbar, dass der vom Bypass 19 umgangene wärmetauscherfreie andere Bereich 16 woanders in der Flüssigkeitsleitung 14 zwischen irgendeinem der Anschlüsse 15 und dem Flüssigkeit-Kältemittel-Wärmetauscher 7 liegt. Das Öffnen und Schließen des Bypasses 19 erfolgt mit dem ersten Ventil 21. Im Flüssigkeit-Luft-Wärmetauscher 10 ist der Bypass 19 mit von der Luftfördereinrichtung 13 geförderter Luft für den Wärmetausch mit Flüssigkeit anströmbar. Der Luft-Kältemittel-Wärmetauscher 11 und der Flüssigkeit-Luft-Wärmetauscher 10 sind zusammen als eine Einheit ausgebildet und über mehrere lamellenförmig angeordnete als Wärmeleitbleche ausgebildete Wärmeleitelemente 12 wärmeleitend miteinander verbunden.

Das zweite Ventil 23 befindet sich in dem vom Bypass 19 umgangenen wärmetauscherfreien anderen Bereich 16 der Flüssigkeitsleitung 14. Bei Betrieb dient es im geschlossenen Zustand zum Blockieren einer Flüssigkeitsströmung durch diesen Bereich 16 und im offenen Zustand zum Gewähren einer solchen. Der Flüssigkeit-Kältemittel-Wärmetauschers 7 ist ohne darauf beschränkt zu sein als Plattenwärmetauscher ausgebildet. Als Flüssigkeit ist dafür zum Beispiel Wasser oder ein Wasser-Glykol-Gemisch einsetzbar. Bei Betrieb des Kältemittelkreises 3 wird dort vom Kältemittel Wärme an die Flüssigkeit abgegeben. Ist der Kältemittelkreis 3 hingegen ausgeschaltet strömt die Flüssigkeit einfach so durch Flüssigkeit-Kältemittel-Wärmetauschers 7. Denkbar ist eine Ausführung mit im Heiz- und Kühlgerät 1 integrierter Regelung, mit der das erste Ventil 21 und das zweite Ventil 23 und die Leistung des elektrisch betreibbaren Verdichters 5 und das Ein- und Ausschalten des Kältemittelkreises 3 und das Expansionsorgan 9 sowie die dem Kältemittel-Luft-Wärmetauscher 11 und dem Flüssigkeit-Luft-Wärmetauscher 10 zugeordnete Luftfördereinrichtung 13 regelbar sind.

Das Kühl- und Heizgerät 1 ist beispielsweise als Inneneinheit in einem Kühlraum eines Kühl- oder Pharmafahrzeugs einsetzbar.

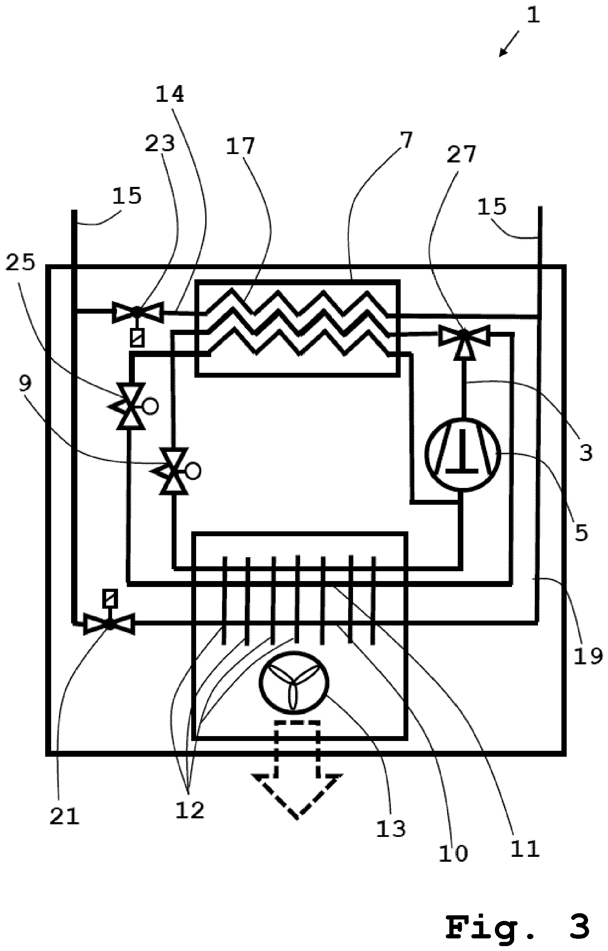

In Figur 3 ist ein weiteres Ausführungsbeispiel eines Kühl- und Heizgeräts 1 für ein Fahrzeug dargestellt. In dem Kühl- und Heizgerät 1 befindet sich ein Kältemittelkreis 3 mit elektrisch betreibbaren Verdichter 5, Flüssigkeit-Kältemittel-Wärmetauscher 7, zwei als Expansionsventile ausgebildeten Expansionsorganen 9, 25 und mit Luft-Kältemittel-Wärmetauscher 11. Der elektrisch betreibbare Verdichter 5 lässt sich ein- und ausschalten, so dass der Kältemittelkreis 3 dadurch ein- und ausschaltbar ist. Nach dem Ausgang des Verdichters 5 ist in der Kältemittelleitung ein Dreiwegeventil 27 angeordnet, mit dem der Kältemittelfluss zwischen zwei Zweigen des Kältemittelkreises 3 schaltbar ist. Der eine Zweig verläuft entsprechend dem in Figur 1 gezeigten Kreislauf des Kältemittelkreises 3 zum Kühlen von Luft im dabei als Verdampfer betreibbaren Luft-Kältemittel-Wärmetauscher 11 und zum Heizen von Flüssigkeit im dabei als Kondensator/Gaskühler betreibbaren Flüssigkeit-Kältemittel-Wärmetauscher 7. Bei dem anderen Zweig ist hingegen der Luft-Kältemittel-Wärmetauscher 11 als Kondensator/Gaskühler und der Flüssigkeit-Kältemittel-Wärmetauscher 7 als Verdampfer betreibbar, wobei dazwischen in Kältemittelleitung das zweite Expansionsorgan 25 angeordnet ist. Der Kältemittelkreis 3 ist also mit dem Dreiwegeventil 27 zwischen Kühlen und Heizen von Luft im Luft-Kältemittel-Wärmetauscher 11 beziehungsweise zwischen Heizen und Kühlen von Flüssigkeit im Flüssigkeit-Kältemittel-Wärmetauscher 7 umschaltbar ausgebildet. Der Flüssigkeit-Kältemittel-Wärmetauscher 7 und der Luft-Kältemittel-Wärmetauscher 11 weisen getrennte Kältemittelleitungen zum einen für den Betrieb als Kondensator/Gaskühler und zum andern für den Betrieb als Verdampfer auf. Denkbar sind auch andere bekannte Ausführungsbeispiele für das Umschalten eines Kältemittelkreises 3, wie beispielsweise mit einem Verdichter 5, in dem die Strömungsrichtung des Kältemittels umkehrbar ist und wobei der Kältemittelkreis 3 im Wesentlichen nur einen Zweig aufweist.

Ferner umfasst das Kühl- und Heizgerät 1 Anschlüsse 15 ausgebildet zum Anschließen an einen Flüssigkeitskreis. Dadurch ist der Flüssigkeits-Kältemittel-Wärmetauscher 7 daran anschließbar. Zu dessen für einen Flüssigkeitskreis vorgesehenen Bereich 17 ist im Kühl- und Heizgerät 1 ein Bypass 19 angeordnet. Das Öffnen und Schließen des Bypasses 19 erfolgt mit dem ersten Ventil 21. Der Bypass 19 verläuft durch den Flüssigkeit-Luft-Wärmetauscher 10. Dort ist der Bypass 19 mit von der Luftfördereinrichtung 13 geförderter Luft anströmbar, so dass bei durch den Bypass 19 strömender Flüssigkeit und bei durch den Flüssigkeit-Luft-Wärmetauscher 10 strömender Luft zwischen der Flüssigkeit und der Luft Wärme übertragbar ist. Im Fall von dort strömender heißer Flüssigkeit wird diese dort durch Luft gekühlt. Der Luft-Kältemittel-Wärmetauscher 11 und der Flüssigkeit-Luft-Wärmetauscher 10 sind zusammen als eine Einheit ausgebildet und über mehrere lamellenförmig angeordnete als Wärmeleitbleche ausgebildete Wärmeleitelemente 12 wärmeleitend miteinander verbunden. Der Luftströmungsweg von durch die Luftfördereinrichtung geförderter Luft verläuft durch den Luft-Kältemittel-Wärmetauscher 11 und den Flüssigkeit-Luft-Wärmetauscher 10.

Außerdem befindet sich ein zweites Ventil 23 in der Flüssigkeitsleitung zum für einen Flüssigkeitskreis vorgesehenen Bereich 17 des Flüssigkeit-Kältemittel-Wärmetauschers 7. Bei Betrieb dient es im geschlossenen Zustand zum Blockieren einer Flüssigkeitsströmung durch diesen Bereich 17 und im offenen Zustand zum Gewähren einer solchen. Der Flüssigkeits-Kältemittel-Wärmetauscher 7 ist also damit in Parallelanordnung zum mit dem ersten Ventil 21 schaltbaren Flüssigkeit-Luft-Wärmetauscher 10 schaltbar.

Optional sind das erste Ventil 21 und das zweite Ventil 23 in der Größe ihrer jeweiligen Durchlassöffnung regelbar. Ferner ist optional die Drehzahl des elektrisch betreibbaren Motors der Luftfördereinrichtung 13 regelbar. Denkbar ist die Variante, dass das erste Ventil 21 und das zweite Ventil 23 zusammen als ein Dreiwegeventil ausgebildet sind. Der Flüssigkeit-Kältemittel-Wärmetauschers 7 ist ohne darauf beschränkt zu sein als Plattenwärmetauscher ausgebildet. Als Flüssigkeit ist dafür zum Beispiel Wasser oder ein Wasser-Glykol-Gemisch einsetzbar. Denkbar ist eine Ausführung mit im Heiz- und Kühlgerät 1 integrierter Regelung, mit der das erste Ventil 21 und das zweite Ventil 23 und die Leistung des elektrisch betreibbaren Verdichters 5 und das Ein-, Aus- sowie Umschalten des Kältemittelkreises 3 und das Expansionsorgan 9 sowie die Luftfördereinrichtung 13 regelbar sind.

Das Kühl- und Heizgerät 1 ist beispielsweise als Außeneinheit an einem Kühlfahrzeug einsetzbar.

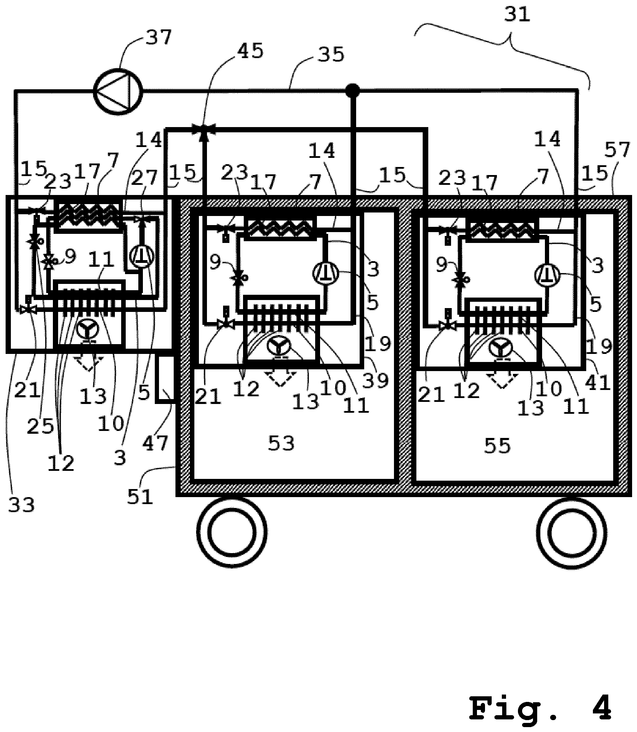

In Figur 4 ist schematisch ein Ausführungsbeispiel eines Kühl- und Heizsystems 31 eines Fahrzeugs 51 im Kühlbetrieb bei warmer Außenluft gezeigt. Das Fahrzeug 51 ist beispielsweise ein Kühlwagon auf Schienen. Das Kühl- und Heizsystem 31 umfasst ein erstes Kühl- und Heizgerät 33 einen Flüssigkeitskreis 35 und zwei weitere Kühl- und Heizgeräte 39, 41. Das zwischen Kühlbetrieb und Wärmepumpenbetrieb umschaltbare erste Kühl- und Heizgerät 33 entspricht dem in Figur 3 gezeigten, wobei die Bezugszeichen für die Komponenten des ersten Kühl- und Heizgeräts 33 beibehalten sind. Es ist als Außeneinheit außen vorne am Fahrzeug 51 angeordnet. Durch den Luft-Kältemittel-Wärmetauscher 11 des ersten Kühl- und Heizgeräts 33 ist keine Luft aus einem Fahrzeuginnenraum sondern als Luft nur Luft von außen förderbar. Das erste Kühl- und Heizgerät 33 ist über seine Anschlüsse 15 an den Flüssigkeitskreis 35 angebunden. Der Flüssigkeitskreis 35 verfügt über eine Pumpe 37 die eingerichtet ist, Flüssigkeit für die Zirkulation im Flüssigkeitskreis 35 ohne Phasenwechsel zu pumpen. Die Flüssigkeit ist Wasser oder ein Wasser-Glykol-Gemisch. Denkbar sind auch andere geeignete Flüssigkeiten, mit denen Wärme transportiert werden kann. Die Flüssigkeitsleitungen verlaufen für die größeren Distanzen auf dem Fahrzeug 51. An den Flüssigkeitskreis 35 sind zwei weitere Kühl- und Heizgeräte 39, 41 mit ihren jeweiligen Anschlüssen 15 angebunden. Die beiden weiteren Kühl- und Heizgeräte 39, 41 entsprechen jeweils dem in Figur 1 gezeigten, wobei die Bezugszeichen für die Komponenten der weiteren Kühl- und Heizgeräte 39, 41 beibehalten wurden. Die weiteren Kühl- und Heizgeräte 39, 41 sind im Flüssigkeitskreis 35 zueinander parallel und zum ersten Kühl- und Heizgerät 33 in Reihe geschaltet. Das eine weitere Kühl- und Heizgerät 39 ist oben im vorderen als Kühlraum ausgebildeten Fahrzeuginnenraum 53 und das andere weitere Kühl- und Heizgerät 41 ist oben im hinteren auch als Kühlraum ausgebildeten Fahrzeuginnenraum 55 jeweils als Inneneinheit angeordnet. Ihre Anschlüsse 15 an den Flüssigkeitskreis 35 führen nach oben durch das Fahrzeugdach 57.

Der Kältemittelkreis 3 im ersten Heiz- und Kühlgerät 33 ist auf Kühlbetrieb zum Kühlen der durch den Flüssigkeit-Kältemittel-Wärmetauscher 7 strömenden Flüssigkeit geschaltet. Das zweite Ventil 23 ist dafür geöffnet. Der Flüssigkeits-Kältemittel-Wärmetauscher 7 wird als Verdampfer betrieben, in dem das im zweiten Expansionsventil 25 expandierte Kältemittel verdampft. Der Luft-Kältemittel-Wärmetauscher 11 fungiert als Kondensator/Gaskühler, in dem an die durch ihn strömende Außenluft Wärme vom komprimierten heißen Kältemittel abgegeben wird. Das erste Ventil 21 ist geschlossen und verhindert damit Flüssigkeitsströmung durch den Bypass 19. Die im Flüssigkeit-Kältemittel-Wärmetauscher 7 abgekühlte Flüssigkeit wird von der Pumpe 37 durch den Flüssigkeitskreis 35 zu den beiden weiteren Kühl- und Heizgeräten 39, 41 gepumpt. Auch dort sind jeweils das erste Ventil 21 geschlossen und das zweite Ventil 23 geöffnet, so dass die Flüssigkeit durch den jeweiligen dortigen Flüssigkeits-Kältemittel-Wärmetauscher 7 strömt. In jedem der beiden weiteren Kühl- und Heizgeräte 39, 41 sind die Kältemittelkreise 3 eingeschaltet. Der jeweilige Flüssigkeits-Kältemittel-Wärmetauscher 7 fungiert als Kondensator/Gaskühler, in dem das komprimierte heiße Kältemittel Wärme an die zuvor im ersten Kühl- und Heizgerät 33 abgekühlte Flüssigkeit des Flüssigkeitskreises 35 abgibt. Im jeweiligen Luft-Kältemittel-Wärmetauscher 11 der beiden weiteren Kühl- und Heizgeräte 39, 41 verdampft das zuvor im Expansionsventil 9 entspannte Kältemittel und entzieht dabei der durch den jeweiligen Luft-Kältemittel-Wärmetauscher 11 strömenden Luft Wärme. Somit wird Luft im vorderen Fahrzeuginnenraum 53 und im hinteren Fahrzeuginnenraum 55 gekühlt. Die erwärmte Flüssigkeit strömt zurück zum ersten Kühl- und Heizgerät 33, wo sie erneut gekühlt wird. Die Stärke der Kühlung der Luft in dem vorderen Fahrzeuginnenraum 53 und in dem hinteren Fahrzeuginnenraum 55 ist unabhängig voneinander, je nach eingestellter Leistung des jeweiligen Verdichters 5 der beiden weiteren Kühl- und Heizgeräte 39, 41 und nach Aufteilung der Flüssigkeitsströme am Ventil 45 im Flüssigkeitskreis 35, regelbar. Mit der als Steuerung mit Prozessor ausgebildete Regelung 47 unten am ersten Kühl- und Heizgerät 33 sind das Ein- und Ausschalten der Kältemittelkreisläufe 3 der Kühl- und Heizgeräte 33, 39, 41 sowie die Ventile 21, 23, 45 des Flüssigkeitskreises 35 einschließlich der ersten Ventile 21 und zweiten Ventile 23 der Kühl- und Heizgeräte 33, 39, 41 und das Umschalten des Kältemittelkreises 3 des ersten Kühl- und Heizgeräts 33 automatisch regelbar. Ferner sind die Leistung der elektrisch betreibbaren Verdichter 5 und die Expansionsorgane 9, 25 und die den Kältemittel-Luft-Wärmetauschern 11 sowie den Flüssigkeit-Luft-Wärmetauscher 10 zugeordneten Luftfördereinrichtungen 13 der Kühl- und Heizgeräte 33, 39, 41 und die Förderleistung der Pumpe 37 des Flüssigkeitskreises 35 mit der Regelung 47 automatisch regelbar. Ein Temperatursensor misst die Temperatur der Außenluft und je ein Temperatursensor misst die Temperaturen der Innenluft des vorderen Fahrzeuginnenraums 53 und des hinteren Fahrzeuginnenraums 55. Die Temperatursensoren sind wegen der Übersichtlichkeit nicht dargestellt.

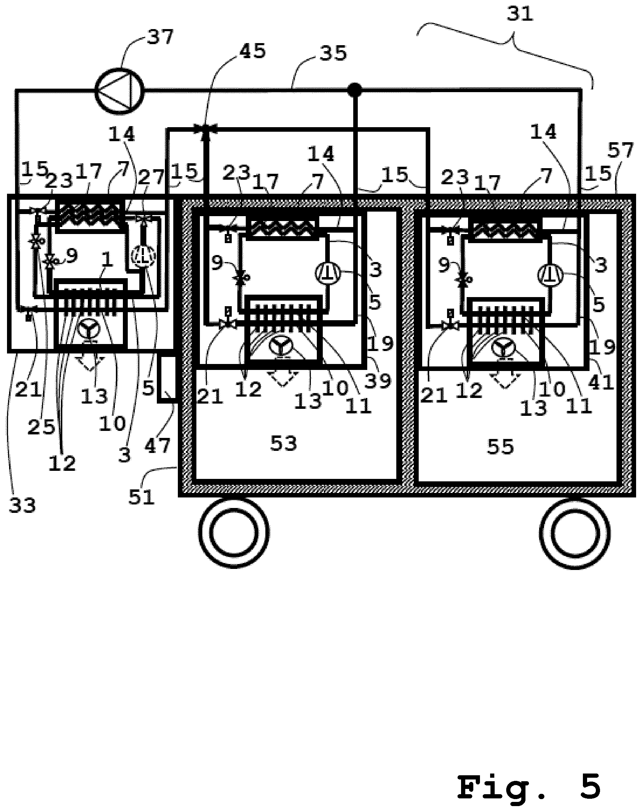

In Figur 5 ist schematisch das Ausführungsbeispiel eines Kühl- und Heizsystems 31 von Figur 4 mit denselben Bezugszeichen im Kühlbetrieb bei kühler Außenluft gezeigt. Die Einstellungen und Funktionen von Flüssigkeitskreis 35 und den beiden weiteren Kühl- und Heizgeräten 39, 41 sind so wie zu Figur 4 beschrieben. Nur im ersten Kühl- und Heizgerät 33 haben sich Veränderungen der Einstellungen ergeben. So ist der Kältemittelkreislauf 3 ausgestellt und das zweite Ventil 23 geschlossen. Hingegen ist das erste Ventil 21 geöffnet, was die von der Pumpe 37 geförderte Flüssigkeit durch den Bypass 19 als Umgehung des abgesperrten Bereichs 17 für Flüssigkeit des Flüssigkeit-Kältemittel-Wärmetauschers 7 strömen lässt. Der Bypass 19 führt durch den Flüssigkeit-Luft-Wärmetauscher 10 des ersten Kühl- und Heizgeräts 33. Dort wird der Bypass 19 von durch die Luftfördereinrichtung 13 geförderter kühler Außenluft so umströmt, dass die in ihm strömende Flüssigkeit durch die strömende Luft abgekühlt wird. Die Flüssigkeit überträgt dabei also Wärme an die Außenluft. Die so abgekühlte Flüssigkeit strömt weiter durch den Flüssigkeitskreis 35 zu den weiteren Kühl- und Heizgeräten 39, 41, von denen sie Wärme abführt. Die weiteren Kühl- und Heizgeräte 39, 41 kühlen mittels ihrer eingeschalteten Kältemittelkreise 3 die Luft im vorderen Fahrzeuginnenraum 53 beziehungsweise hinteren Fahrzeuginnenraum 55. Das erste Kühl- und Heizgerät 33 fungiert in diesem Fall als Kühler von Flüssigkeit direkt mit Außenluft.

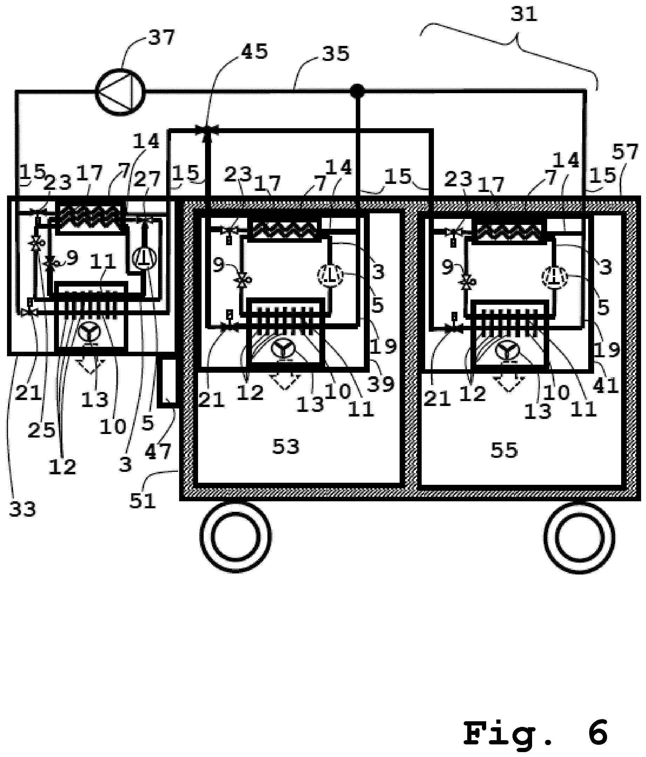

In Figur 6 ist schematisch das Ausführungsbeispiel eines Kühl- und Heizsystems 1 von Figur 4 mit denselben Bezugszeichen im Heizbetrieb dargestellt. Der eingeschaltete Kältemittelkreis 3 des ersten Kühl- und Heizgeräts 33 läuft dabei im Wärmepumpenbetrieb. Das Dreiwegeventil 27 ist folglich so geschaltet, dass der Luft-Kältemittel-Wärmetauscher 11 als Verdampfer und der Flüssigkeit-Kältemittel-Wärmetauscher 7 als Kondensator/Gaskühler zum Heizen von Flüssigkeit des Flüssigkeitskreises 35 betrieben werden. Dabei ist das zweite Ventil 23 für den Durchfluss von Flüssigkeit durch den Flüssigkeit-Kältemittel-Wärmetauscher 7 geöffnet und das erste Ventil 21 des Bypasses 19 dazu geschlossen.

Die Pumpe 37 fördert die erhitzte Flüssigkeit durch den Flüssigkeitskreis 35 zu den beiden weiteren Kühl- und Heizgeräten 39, 41. Bei diesen ist der jeweilige Kältemittelkreis 3 ausgeschaltet sowie das erste Ventil 21 geöffnet und das zweite Ventil 23 geschlossen, so dass erhitzte Flüssigkeit des Flüssigkeitskreises 35 jeweils durch den Bypass 19 und damit durch den Flüssigkeit-Luft-Wärmetauscher 10 strömt. Jeweils dort gibt die erhitzte Flüssigkeit Wärme an die von der Luftfördereinrichtung 13 durch den Flüssigkeit-Luft-Wärmetauscher 10 geförderte Luft ab. Somit wird die Luft sowohl im vorderen Fahrzeuginnenraum 53 als auch im hinteren Fahrzeuginnenraum 55 geheizt. Die beiden weiteren Kühl- und Heizgeräte 39, 41 fungieren dabei als die Innenluft heizende Flüssigkeitsheizkörper. Die so abgekühlte Flüssigkeit strömt durch den Flüssigkeitskreis 35 wieder zurück zum ersten Kühl- und Heizgerät 33, wo sie erneut erhitzt wird.

In Figuren 4, 5 und 6 sind die Ports durchströmter Ventile schwarz dargestellt.

Das in den Figuren 4, 5 und 6 gezeigte Kühl- und Heizsystem 31 ist nicht auf die Anzahl von zwei weiteren Kühl- und Heizgeräten 39, 41 neben dem ersten Kühl- und Heizgerät 33 beschränkt, sondern es sind auch Ausführungsformen mit einem oder mehr als zwei weiteren Kühl- und Heizgeräten 39, 41 denkbar. Ferner ist eine erweiterte Ausführung des Kühl- und Heizsystem 31 denkbar, bei dem zusätzlich ein oder mehrere Flüssigkeit-Luft-Wärmetauscher an den Flüssigkeitskreis 35 angeschlossene sind. Ferner kann bei vereistem Kältemittel-Luft-Wärmetauscher 11 der Kältemittelkreis 3 des jeweiligen Kühl- und Heizgeräts (33, 39, 41) ausgeschaltet werden und die zuvor im Flüssigkeit-Kältemittel-Wärmetauscher 7 erwärmte Flüssigkeit zum Abtauen des Kältemittel-Luft-Wärmetauschers 11 bei geöffnetem ersten Ventil 21 durch den Flüssigkeit-Luft-Wärmetauscher 10 geleitet werden.

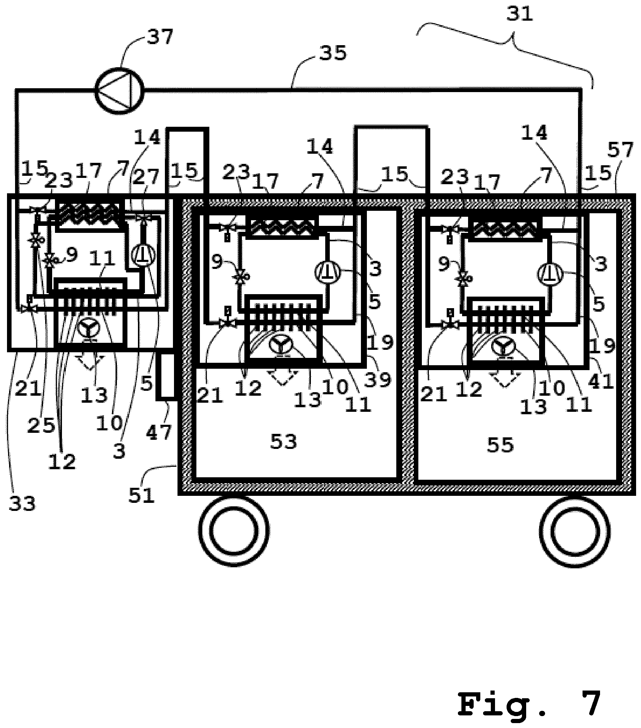

In Figur 7 ist schematisch ein weiteres Ausführungsbeispiel eines Kühl- und Heizsystems 31 eines Fahrzeugs 51 dargestellt. Dieses entspricht im Wesentlichen einschließlich der Temperatursensoren dem in den Figuren 4, 5 und 6 gezeigten Kühl- und Heizsystem 31 mit den dortigen Bezugszeichen. So sind dort das mit umschaltbaren Kältemittelkreis 3 ausgestattete erste Kühl- und Heizgerät 33 außen vorne am Fahrzeug 51 sowie damit über den Flüssigkeitskreis 35 verbunden die beiden weiteren Kühl- und Heizgeräte 39, 41 als Inneneinheiten das eine auf den vorderen Fahrzeuginnenraum 53 und das andere auf den hinteren Fahrzeuginnenraum 55 verteilt angeordnet. Jedoch sind die beiden weiteren Kühl- und Heizgeräte 39, 41 im Flüssigkeitskreis 35 nicht zueinander parallel sondern in Reihe geschaltet. Ein Dreiwegeventil ist also zur Aufteilung des Flüssigkeitsstroms im Flüssigkeitskreis 35 entbehrlich. In Strömungsrichtung der von der Pumpe 37 geförderten Flüssigkeit wird beim Flüssigkeitskreis 35 zuerst das Kühl- und Heizgerät 39 im vorderen Fahrzeuginnenraum 53 und danach das weitere Kühl- und Heizgerät 41 im hinteren Fahrzeuginnenraum 55 des Fahrzeugs 51 durchströmt. Bei eingeschaltetem Kältemittelkreis 3 und geschlossenem ersten Ventil 21 sowie geöffnetem zweiten Ventil 23 des Kühl- und Heizgeräts 39 im vorderen Fahrzeuginnenraum 53 wird die durch den dortigen als Kondensator/Gaskühler betriebenen Flüssigkeit-Kältemittel-Wärmetauscher 7 die Flüssigkeit erhitz und strömt im Flüssigkeitskreis 35 weiter zum weitere Kühl- und Heizgerät 41 im hinteren Fahrzeuginnenraum 55. Dort ist sie bei ausgeschaltetem Kältemittelkreis 3 und geöffneten ersten Ventil 21 sowie geschlossenen zweiten Ventil 23 des Kühl- und Heizgeräts 41 als Flüssigkeit zum Heizen der Luft oder zum Abtauen des Luft-Kältemittel-Wärmetauschers 11 einsetzbar, indem sie durch den Bypass 19 strömt und dabei Wärme im Flüssigkeit-Luft-Wärmetauscher 10 an die mittels der Luftfördereinrichtung 13 strömende Luft und den Luft-Kältemittel-Wärmetauschers 11 abgibt.

So lässt sich beim Kühlen der Luft im vorderen Fahrzeuginnenraum 53 mit der abgeführten Wärme gleichzeitig die Luft im hinteren Fahrzeuginnenraum 55 heizen. Mit der Regelung 47 wird also nicht nur das gleichzeitige Kühlen oder Heizen der Luft des vorderen Fahrzeuginnenraums 53 und des hinteren Fahrzeuginnenraums 55 geregelt sondern auch die Möglichkeit des Kühlens der Luft des vorderen Fahrzeuginnenraums 53 mit gleichzeitigem Heizen der Luft des hinteren Fahrzeuginnenraums 55 oder bei Vereisung dessen Luft-Kältemittel-Wärmetauschers 11.

Die Flüssigkeit im Flüssigkeitskreis 35 ist beispielsweise Wasser oder ein Wasser-Glykol-Gemisch.

Eine erweiterte Ausführung des Kühl- und Heizsystems 31 ist derart ausgebildet, dass die Richtung des Flüssigkeitsstroms im Flüssigkeitskreis 35 umkehrbar ist, wie beispielsweise mit einer in der Pumprichtung umkehrbare Pumpe 37. Dabei lässt sich dann auch beim Kühlen der Luft im hinteren Fahrzeuginnenraum 55 mit der abgeführten Wärme gleichzeitig die Luft im vorderen Fahrzeuginnenraum 53 heizen.

Denkbar ist auch ein Ausführungsbeispiel eines Kühl- und Heizsystems 31, das eine Kombination aus dem in Figuren 4, 5 und 6 gezeigten Kühl- und Heizsystem 31 und aus dem in Figur 7 gezeigten Kühl- und Heizsystem 31 dergestalt darstellt, dass die beiden weiteren Kühl- und Heizwärmetauscher 39, 41 zueinander mit entsprechenden Ventilen und für die Reihenschaltung vorgesehener Verbindungsleitung im Flüssigkeitskreis zwischen Parallel- und Reihenschaltung umschaltbar sind.

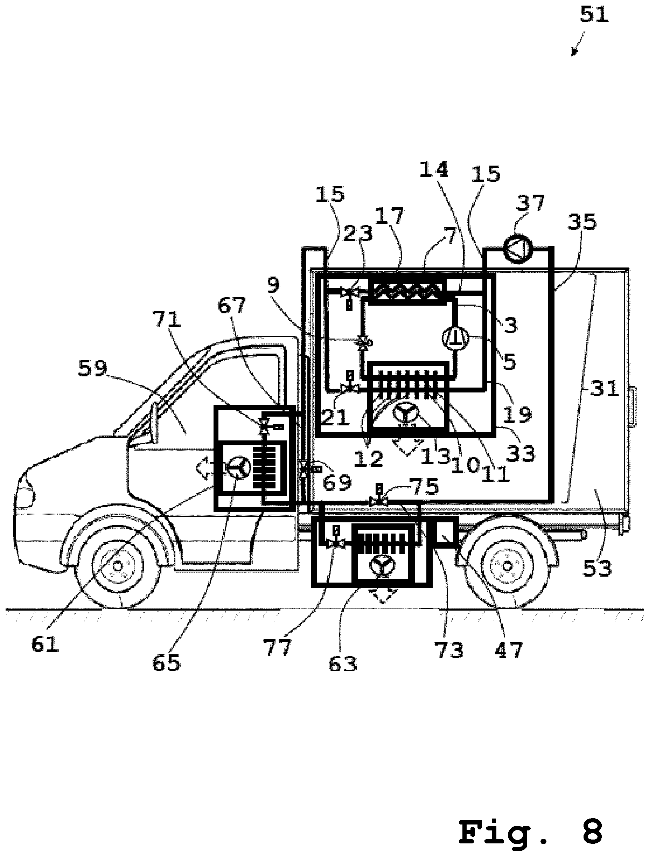

In Figur 8 ist schematisch ein Ausführungsbeispiel eines Fahrzeugs 51 mit einem Kühl- und Heizsystem 31 gezeigt. Es handelt sich um ein Kühl- oder Pharmafahrzeug. Dabei ist die Fahrerkabine 59 und der als Kühlraum ausgebildete Fahrzeuginnenraum 53 im vertikalen Längsschnitt offen dargestellt. Es verfügt über wegen der Übersichtlichkeit nicht gezeigte Temperatursensoren zum Messen der Temperaturen der Außenluft und der Innenluft von Fahrerkabine 59 und Fahrzeuginnenraum 53. Das Heizsystem 31 umfasst ein erstes Kühl- und Heizgerät 33, einen daran angeschlossenen Flüssigkeitskreis 35 mit Pumpe 37 und zwei an den Flüssigkeitskreis 35 angeschlossene Flüssigkeit-Luft-Wärmetauscher-Einheiten 61, 63. Die Flüssigkeit ist beispielsweise Wasser oder ein Wasser-Glykol-Gemisch. Das erste Kühl- und Heizgerät 33 befindet sich als Inneneinheit oben im als Kühlraum ausgebildeten Fahrzeuginnenraum 53 und entspricht dem in Figur 1 gezeigten. An seine Anschlüsse 15 ist der Flüssigkeitskreis 35 angeschlossen. Bei Betrieb des Kältemittelkreises 3 wird die Luft des Fahrzeuginnenraums 53 im als Verdampfer betriebenen Luft-Kältemittel-Wärmetauscher 11 gekühlt und die Flüssigkeit im als Kondensator/Gaskühler laufenden Flüssigkeit-Kältemittel-Wärmetauscher 7 geheizt. Das erste Ventil 21 ist dabei geschlossen und das zweite Ventil 23 geöffnet. Die erhitzte Flüssigkeit strömt von der Pumpe 37 gepumpt im Flüssigkeitskreis 35 zur in der Fahrerkabine 59 angeordneten einen Flüssigkeit-Luft-Wärmetauscher-Einheit 61, in der die erhitzte Flüssigkeit die von der Luftfördereinrichtung 65 geförderte Innenluft der Fahrerkabine 59 heizt. Flüssigkeit-Luft-Wärmetauscher-Einheit 61 verfügt auch über die Luftfördereinrichtung 65 und das Ventil 71.

Der im Flüssigkeitskreis 35 angeordnete Bypass 67 zur Flüssigkeit-Luft-Wärmetauscher-Einheit 61 lässt sich mit dem Ventil 69 öffnen und schließen. Mit geschlossenem Ventil 71 ist bei geöffnetem Bypass 67 die Flüssigkeit-Luft-Wärmetauscher-Einheit 61 für Flüssigkeitsstrom blockiert und damit das Heizen der Innenluft der Fahrerkabine 59 abgeschaltet. Die weitere an den Flüssigkeitskreis 35 angeschossene Flüssigkeit-Luft-Wärmetauscher-Einheit 63 ist als Außeneinheit unterflurig oder denkbar auch an einer anderen Stelle außen am Fahrzeug 51 angeordnet, wobei auch dort ein Bypass 73, ein Ventil 75 eingerichtet zum Öffnen und zum Schließen des Bypasses 73 im Flüssigkeitskreis 35 vorhanden sind. Das Ventil 77 befindet sich in der Flüssigkeit-Luft-Wärmetauscher-Einheit 63. In Bypass-Schaltung des Flüssigkeitskreises 35 kann die zuvor bei Betrieb des Kältemittelkreises 3 im ersten Kühl- und Heizgerät 33 erhitzte Flüssigkeit durch den Flüssigkeit-Luft-Wärmetauscher 10 geleitet werden und zum Abtauen beim zuvor als Verdampfer genutzten Luft-Kältemittel-Wärmetauscher 11 des ersten Kühl- und Heizgeräts 33 eingesetzt werden, wobei dann dort für die strömende Flüssigkeit das erste Ventil 21 geöffnet und das zweite Ventil 23 geschlossen sind. Solange die strömende Flüssigkeit noch warm genug ist, lässt sich damit so auch die zuvor gekühlte Luft im als Kühlraum ausgebildeten Fahrzeuginnenraum 53 heizen. Denkbar ist eine Weiterbildung, bei der das Fahrzeug 51 zusätzlich eine schaltbare Wärmequelle, wie beispielsweise ein elektrisch betreibbarer Flüssigkeitsheizer, im Flüssigkeitskreis 3 aufweist.

Die Regelung 47 steuert das Kühl- und Heizsystem 31, wie insbesondere die Pumpe 37 und die Ventile 21, 23, 69, 71, 75, 77 des Flüssigkeitskreises 35, die Luftfördereinrichtung 65 und den Kältemittelkreis 3 des ersten Kühl- und Heizgeräts 33.

Optional verfügt das Fahrzeug 51 für die Fahrerkabine 59 noch über eine nicht zum Kühl- und Heizsystem 31 gehörende Klimaanlage. Denkbar ist dabei ein Ausführungsbeispiel des Fahrzeugs 51, in dem die Luftfördereinrichtung 65 bei der Flüssigkeit-Luft-Wärmetauscher-Einheit 61 derart umschaltbar ausgebildet ist, dass umgeschaltet bei Betrieb in dem Fahrzeug 51 klimatisierte Luft aus der Fahrerkabine 59 durch die Flüssigkeit-Luft-Wärmetauscher-Einheit 61 nach außen in die Umgebung strömt und dabei die Flüssigkeit im Flüssigkeitskreis 35 kühlt.

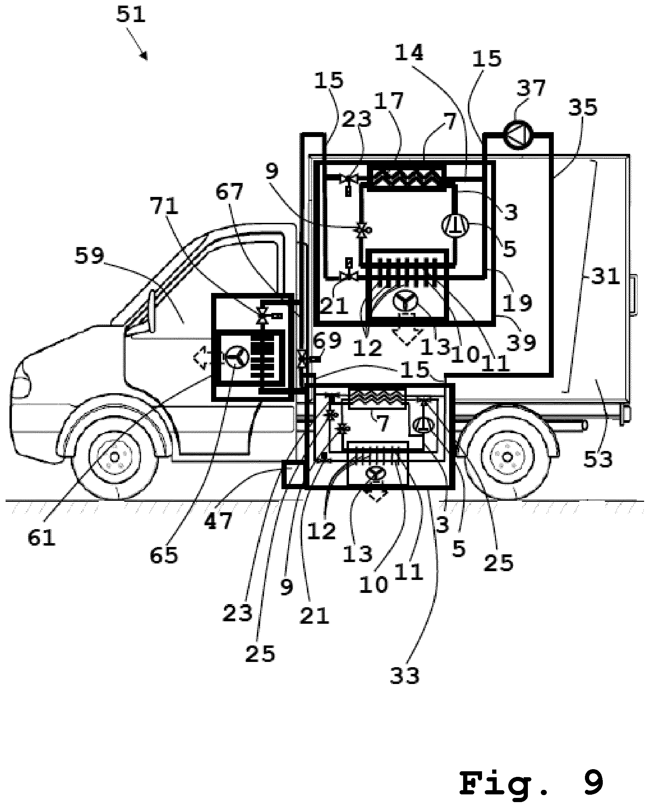

In Figur 9 ist schematisch ein weiteres Ausführungsbeispiel eines Fahrzeugs 51 mit einem Kühl- und Heizsystem 31 dargestellt. Es handelt sich um ein Kühl- oder Pharmafahrzeug. Es verfügt über wegen der Übersichtlichkeit nicht gezeigte Temperatursensoren zum Messen der Temperaturen der Außenluft und der Innenluft von Fahrerkabine 59 und Fahrzeuginnenraum 53. Dabei ist die Fahrerkabine 59 und der als Kühlraum ausgebildete Fahrzeuginnenraum 53 im vertikalen Längsschnitt offen dargestellt. Das erste Kühl- und Heizgerät 33 des Kühl- und Heizsystems 31 ist als Außeneinheit unterflurig oder denkbar auch an einer anderen Stelle außen am Fahrzeug 51 angeordnet. Es handelt sich um ein mit denselben Bezugszeichen für Komponenten wie in Figur 3 gezeigtes erfindungsgemäßes Kühl- und Heizgerät mit einem zwischen Wärmepumpenbetrieb und Kühlbetrieb umschaltbarem Kältemittelkreis 3. Durch dessen Luft-Kältemittel-Wärmetauscher 11 lässt sich von dessen Luftfördereinrichtung 13 nur Luft von außen zum Wärmetausch mit dem Kältemittel fördern. Mit den Anschlüssen 15 ist das erste Kühl- und Heizgerät 33 an den Flüssigkeitskreis 35 angeschlossen. Dessen Pumpe 37 ist optional bezüglich der Pumprichtung umschaltbar ausgebildet. Die Flüssigkeit ist eine übliche Kühlmittelflüssigkeit. Ferner ist an den Flüssigkeitskreis 35 ein weiters Kühl- und Heizgerät 39 angeschlossen, welches mit denselben Bezugszeichen für Komponenten dem in Figur 1 dargestellten entspricht, bei dem der Kältemittelkreis 3 nicht umschaltbar ist. Außerdem ist an den Flüssigkeitskreis 35 wie bei dem in Figur 8 gezeigten Ausführungsbeispiel ein in der Fahrerkabine 59 angeordnete Flüssigkeit-Luft-Wärmetauscher-Einheit 61 angeschlossen. Die Flüssigkeit-Luft-Wärmetauscher-Einheit 61 ist mit Luftfördereinrichtung 65 und Ventil 71 als eine Inneneinheit ausgebildet.

Der im Flüssigkeitskreis 35 angeordnete Bypass 67 zum Flüssigkeit-Luft-Wärmetauscher 61 lässt sich mit dem Ventil 69 öffnen und schließen. Mit geschlossenem Ventil 71 ist bei geöffnetem Bypass 67 der Flüssigkeit-Luft-Wärmetauscher 61 für Flüssigkeitsstrom blockiert und damit das Heizen oder Kühlen der Innenluft der Fahrerkabine 59 abgeschaltet. Das erste Kühl- und Heizgerät 33, das weitere Kühl- und Heizgerät 39 und die Flüssigkeit-Luft-Wärmetauscher-Einheit 61 in der Fahrerkabine 59 sind im Flüssigkeitskreis 35 in Reihe zueinander geschaltet. Mit der Flüssigkeit-Luft-Wärmetauscher-Einheit 61 kann nicht nur mit erhitzter Flüssigkeit die Innenluft in der Fahrerkabine 59 geheizt, sondern bei geschaltetem Kühlbetrieb des Kältemittelkreises 3 im ersten Kühl- und Heizgerät 33 mit dort gekühlter Flüssigkeit gekühlt werden.

Die am ersten Kühl- und Heizgerät 33 angeordnete Regelung 47 steuert das Kühl- und Heizsystem 31, wie insbesondere die Pumpe 37 und die Ventile 21, 23, 69, 71 des Flüssigkeitskreises 35, die Luftfördereinrichtung 65 und die Kältemittelkreise 3 des ersten Kühl- und Heizgeräts 33 und es weiteren Kühl- und Heizgeräts 39.

Bei einem Fahrzeug ist als Inneneinheit der Flüssigkeit-Luft-Wärmetauscher 61 genauso wie in der Fahrerkabine auch in der Fahrgastkabine bzw. einer Kombination davon einsetzbar. Zum Abtauen bei vereistem Luft-Kältemittel-Wärmetauscher 11 wird dessen Kältemittelkreis 3 ausgestellt und erwärmte Flüssigkeit durch den dortigen Flüssigkeit-Luft-Wärmetauscher 10 gepumpt.

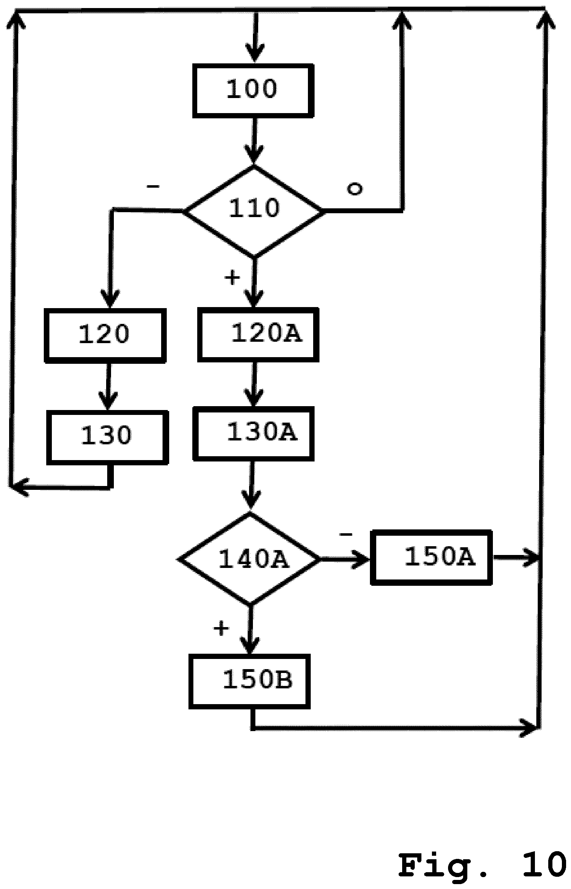

In Figur 10 ist als Flussdiagramm ein Ausführungsbeispiel eines Verfahrens zum Steuern eines erfindungsgemäßen Kühl- und Heizsystems bei einem Fahrzeug, wie beispielsweise einem Kühlfahrzeug, dargestellt. Das Kühl- und Heizsystem ist zum Beispiel das in den Figuren 4, 5 und 6 gezeigte. Je als Kühlraum ausgebildeter Fahrzeuginnenraum des Fahrzeugs befindet sich als Inneneinheit ein in Figur 1 gezeigtes Kühl- und Heizgerät, dessen Kältemittelkreislauf nicht umschaltbar ist. Ferner umfasst das Kühl- und Heizsystem als Außeneinheit über noch ein erfindungsgemäßes Kühl- und Heizgerät, welches dem in Figur 3 abgebildeten entspricht, also dessen Kältemittelkreis zwischen Kühlbetrieb und Wärmepumpenbetrieb umschaltbar ist. In Kühl- und Heizsystem sind sämtliche Kühl- und Heizgeräte an einen Flüssigkeitskreis angeschlossen. Im ersten Verfahrensschritt 100 wird ein Kühl- oder Heizbedarf für einen Fahrzeuginnenraum, wie zum Beispiel einem Kühlraum, in dem sich ein in Figur 1 gezeigtes Kühl- und Heizgerät befindet, ermittelt. Dazu wird die von einem Temperatursensor in dem jeweiligen Fahrzeuginnenraum gemessene Temperatur mit einem vorgegebenen Solltemperaturbereich verglichen. Im Schritt 110 wird dann über das weitere Vorgehen entschieden. Befindet sich die gemessene Temperatur in diesem Solltemperaturbereich, was mit einem Kreis "∘" symbolisiert ist, startet das Verfahren nach einem vorgegebenen Zeitintervall von beispielsweise zehn Sekunden erneut. Sofern hingegen im Schritt 100 ein Kühlbedarf, also eine gemessene Temperatur über dem Solltemperaturbereich, gemessen wird, wird sich im Schritt 110 für den Weg "+" des Kühlens der Innenluft entschieden. Dazu werden beziehungsweise sind im Schritt 120A beim Flüssigkeitskreis die Pumpe angeschaltet sowie beim Kühl- und Heizgerät des jeweiligen Fahrzeuginnenraums der Kältemittelkreis angeschaltet, das erste Ventil geschlossen und das zweite Ventil geöffnet. Somit strömt die Flüssigkeit des Flüssigkeitskreises durch den dort als Kondensator/Gaskühler betrieben Flüssigkeit-Kältemittel-Wärmetauscher und wird dabei erwärmt. Gleichzeitig strömt Innenluft des jeweiligen Fahrzeuginnenraums durch den dortigen als Verdampfer betriebenen Luft-Kältemittel-Wärmetauscher und wird abgekühlt. Folglich wird im Schritt 120A Luft im jeweiligen als Kühlraum ausgebildeten Fahrzeuginnenraum mit dem dortigen Kühl- und Heizgerät mithilfe dessen im Kühlbetrieb bezüglich der Luft eingeschalteten Kältemittelkreises gekühlt.

Im Schritt 130A wird die Außenlufttemperatur mit einem Außentemperatursensor ermittelt. Diese wird im Schritt 140A dahingehend geprüft, ob sie über einer vorbestimmten Grenztemperatur von beispielsweise 8 °C liegt. Die Grenztemperatur ist die Temperatur, über der die Außenluft nicht mehr genügend kalt ist, um die Flüssigkeit des Flüssigkeitskreises des Kühl- und Heizsystems im ausreichenden Umfang direkt zu kühlen. Ist das Ergebnis "-", also die gemessene Außenlufttemperatur nicht über der Grenztemperatur, werden bzw. sind im Schritt 150A beim als Außeneinheit eingesetzten Kühl- und Heizgerät der Kältemittelkreis ausgeschaltet, das erste Ventil geöffnet sowie das zweite Ventil geschlossen. Dadurch strömt die im Schritt 120A erwärmte Flüssigkeit durch den Bypass im als Außeneinheit eingesetzten Kühl- und Heizgerät und gibt im dortigen Flüssigkeit-Luft-Wärmetauscher Wärme an die dort strömende Außenluft ab. Die Flüssigkeit zirkuliert im Flüssigkeitskreis und gibt auf diese Weise die beim Kühlen des/der Fahrzeuginnenraums/Fahrzeuginnenräume abgeführte Wärme an die Außenluft ab. Nach einem Zeitintervall von beispielsweise 10 Sekunden beginnt das Verfahren erneut.

Ist im Schritt 140A jedoch das Ergebnis "+", also die gemessene Außenlufttemperatur über der Grenztemperatur, werden bzw. sind im Schritt 150B beim als Außeneinheit eingesetzten Kühl- und Heizgerät der Kältemittelkreis angeschaltet und auf Kühlbetrieb bezüglich der Flüssigkeit umgeschaltet als auch das erste Ventil geschlossen sowie das zweite Ventil geöffnet. Somit strömt die im Schritt 120A erwärmte Flüssigkeit des Flüssigkeitskreises durch den dort als Verdampfer betrieben Flüssigkeit-Kältemittel-Wärmetauscher und wird dabei abgekühlt. Gleichzeitig strömt Außenluft durch den dortigen als Kondensator/Gaskühler betriebenen Luft-Kältemittel-Wärmetauscher und führt Wärme ab. Folglich wird im Schritt 150B die im Schritt 120A erwärmte Flüssigkeit mithilfe des Kältemittelkreises des als Außeneinheit eingesetzten Kühl- und Heizgerät gekühlt. Die Flüssigkeit zirkuliert im Flüssigkeitskreis und gibt auf diese Weise die beim Kühlen des/der Fahrzeuginnenraums/Fahrzeuginnenräume abgeführte Wärme mittelbar über den Kältemittelkreis der Außeneinheit an die Außenluft ab. Nach einem Zeitintervall von beispielsweise 10 Sekunden beginnt das Verfahren erneut.

Sofern hingegen im Schritt 100 ein Heizbedarf, also eine gemessene Temperatur unter dem Solltemperaturbereich, gemessen wird, wird sich im Schritt 110 für den Weg "-" des Heizens der Innenluft entschieden. Dazu werden beziehungsweise sind im Schritt 120 beim Flüssigkeitskreis die Pumpe angeschaltet und beim als Außeneinheit eingesetzten Kühl- und Heizgerät der Kältemittelkreis angeschaltet und auf Wärmepumpenbetrieb umgeschaltet als auch das erste Ventil geschlossen sowie das zweite Ventil geöffnet. Somit strömt die Flüssigkeit des Flüssigkeitskreises durch den dort als Kondensator/Gaskühler betrieben Flüssigkeit-Kältemittel-Wärmetauscher und wird dabei geheizt. Gleichzeitig strömt Außenluft durch den dortigen als Verdampfer betriebenen Luft-Kältemittel-Wärmetauscher und gibt Wärme an das Kältemittel ab. Folglich wird im Schritt 120 die Flüssigkeit mithilfe des Kältemittelkreises des als Außeneinheit eingesetzten Kühl- und Heizgerät geheizt. Im Schritt 130 werden beziehungsweise sind beim Kühl- und Heizgerät des jeweiligen Fahrzeuginnenraums der Kältemittelkreis ausgeschaltet, das erste Ventil geöffnet und das zweite Ventil geschlossen. Dadurch strömt die im Schritt 120 erwärmte Flüssigkeit durch den Bypass im jeweiligen als Inneneinheit eingesetzten Kühl- und Heizgerät und gibt im dortigen Flüssigkeit-Luft-Wärmetauscher Wärme an die dort strömende Innenluft des jeweiligen Fahrzeuginnenraums ab. Die Flüssigkeit zirkuliert im Flüssigkeitskreis und gibt auf diese Weise die von der Außeneinheit mittels dessen im Wärmepumpenbetrieb laufenden Kältemittelkreises aufgenommene Wärme beim Heizen von Luft in dem/den Fahrzeuginnenraum/Fahrzeuginnenräumen wieder ab. Nach einem Zeitintervall von beispielsweise 10 Sekunden beginnt das Verfahren erneut. Das Verfahren wird zum Beispiel automatisch mit der Regelung des Kühl- und Heizsystems des Fahrzeugs gesteuert.

Denkbar ist eine Weiterbildung des Verfahrens, indem zur Feinjustierung und zur besseren unterschiedlichen Temperierung verschiedener Fahrzeuginnenräume je Kühl- und Heizgerät auch die Leistung des elektrisch betreibbaren Verdichters und das Expansionsorgan und die dem Kältemittel-Luft-Wärmetauscher zugeordnete Luftfördereinrichtung sowie bezüglich des Flüssigkeitskreises auch dessen gegebenenfalls weiteren Ventile und die Förderleistung der Pumpe geregelt werden.

Außerdem ist eine Weiterbildung des Verfahrens denkbar, bei der noch geprüft wird, ob der Luft-Kältemittel-Wärmetauscher eines in einem Fahrzeuginnenraum angeordneten Kühl- und Heizgeräts vereist ist, und falls ja dessen zuvor zum Kühlen der Luft im Fahrzeuginnenraum angeschalteter Kältemittelkreis ausgeschaltet, das erste Ventil geöffnet sowie das zweite Ventil geschlossen wird. Darauf wird die zuvor beim Kühlen der Luft im Fahrzeuginnenraum im Flüssigkeit-Kältemittel-Wärmetauscher erwärmte Flüssigkeit des Flüssigkeitskreises durch den Bypass und damit den Flüssigkeit-Luft-Wärmetauscher gepumpt. So wird die zuvor erwärmte Flüssigkeit zum Abtauen bei Vereisung des Luft-Kältemittel-Wärmetauschers genutzt.

## Patentansprüche

1. Kühl- und Heizgerät (1, 33, 39, 41) für ein Fahrzeug, wobei das Kühl- und Heizgerät (1, 33, 39, 41) einen Kältemittelkreis (3), der einen elektrisch betreibbaren Verdichter (5), einen als Kondensator/Gaskühler betreibbaren Flüssigkeit-Kältemittel-Wärmetauscher (7), mindestens ein Expansionsorgan (9, 25) und einen einzigen Luft-Kältemittel-Wärmetauscher (11), wobei der als Verdampfer betreibbar
ist, umfasst, sowie Anschlüsse (15) ausgebildet zum Anschließen des Flüssigkeit-Kältemittel-Wärmetauschers (7) auch an einen Flüssigkeitskreis umfasst, **dadurch gekennzeichnet,**
- **dass** das Kühl- und Heizgerät (1, 33, 39, 41) einen einzigen Flüssigkeit-Luft-Wärmetauscher (10) aufweist,
- **dass** das Kühl- und Heizgerät (1, 33, 39, 41) einen Bypass (19) zum für einen Flüssigkeitskreis vorgesehenen Bereich (17) des Flüssigkeit-Kältemittel-Wärmetauschers (7) und/oder zu einem wärmetauscherfreien anderen Bereich (16) der für einen Flüssigkeitskreis vorgesehenen Flüssigkeitsleitung (14) des Kühl- und Heizgeräts (1, 33, 39, 41) aufweist,
- **dass** das Kühl- und Heizgerät (1, 33, 39, 41) zumindest ein erstes Ventil (21) eingerichtet zum Öffnen und zum Schließen des Bypasses (19) aufweist,
- **dass** im Bypass (19) der Flüssigkeit-Luft-Wärmetauscher (10) angeordnet ist, wobei der Flüssigkeit-Luft-Wärmetauscher (10) derart ausgebildet ist, dass dort bei durch den Bypass (19) strömender Flüssigkeit und bei durch den Flüssigkeit-Luft-Wärmetauscher (10) strömender Luft zwischen der Flüssigkeit und der Luft Wärme übertragbar ist, und
- **dass** die für die Luftförderung durch den Luft-Kältemittel-Wärmetauscher (11) vorgesehene Luftfördereinrichtung (13) auch für die Luftförderung durch den Flüssigkeit-Luft-Wärmetauscher (10) vorgesehen ist, wobei der Luftströmungsweg sowohl durch den Luft-Kältemittel-Wärmetauscher (11) als auch durch den Flüssigkeit-Luft-Wärmetauscher (10) verläuft.

2. Kühl- und Heizgerät (1, 33, 39, 41) nach Anspruch 1 **dadurch gekennzeichnet, dass** der Luft-Kältemittel-Wärmetauscher (11) und der Flüssigkeit-Luft-Wärmetauscher (10) zusammen als eine Einheit ausgebildet sind und über ein oder mehrere Wärmeleitelemente wärmeleitend miteinander verbunden sind.

3. Kühl- und Heizgerät (1, 33, 39, 41) nach Anspruch 1 oder 2 **dadurch gekennzeichnet, dass** es ein zweites Ventil (23) vorgesehen zum Blockieren und zum Gewähren von Flüssigkeitsströmung durch den vom Bypass (19) umgangenen Bereich (16, 17) umfasst.

4. Kühl- und Heizgerät (1, 33, 39, 41) nach Anspruch 3 **dadurch gekennzeichnet, dass** das erste Ventil (21) und/oder das zweite Ventil (23) derart ausgebildet ist/sind, dass die Größe seiner/ihrer Durchlassöffnung/en regelbar ist/sind.

5. Kühl- und Heizgerät (1, 33, 39, 41) nach einem der Ansprüche 1 bis 4 **dadurch gekennzeichnet, dass** der Kältemittelkreis (3) umschaltbar derart ausgebildet ist, dass der Flüssigkeit-Kältemittel-Wärmetauscher (7) auch als Verdampfer und der Luft-Kältemittel-Wärmetauscher (11) auch als Kondensator/Gaskühler betreibbar sind.

6. Kühl- und Heizgerät (1, 33, 39, 41) nach Anspruch 5 **dadurch gekennzeichnet, dass** der Flüssigkeit-Kältemittel-Wärmetauscher (7) und/oder der Luft-Kältemittel-Wärmetauscher (11) getrennte Kältemittelleitungen zum einen für den Betrieb als Kondensator/Gaskühler und zum andern für den Betrieb als Verdampfer aufweis(t)/en.

7. Kühl- und Heizgerät (1, 33, 39, 41) nach einem der Ansprüche 1 bis 6 **dadurch gekennzeichnet, dass** es eine derart ausgebildete Regelung (47) umfasst, mit der das erste Ventil (21) und/oder gegebenenfalls das zweite Ventil (23) und/oder die Leistung des elektrisch betreibbaren Verdichters (5) und/oder das Ein- und Ausschalten sowie gegebenenfalls auch Umschalten des Kältemittelkreises (3) und/oder das Expansionsorgan (9, 25) und/oder die dem Kältemittel-Luft-Wärmetauscher (11) sowie dem Flüssigkeit-Luft-Wärmetauscher (10) zugeordnete Luftfördereinrichtung (13) regelbar ist/sind.

8. Kühl- und Heizsystem (31) für ein Fahrzeug, wobei das Kühl- und Heizsystem (31) zumindest ein erstes Kühl- und Heizgerät (33) nach einem der Ansprüche 1 bis 7 umfasst, **dadurch gekennzeichnet,**
- **dass** das Kühl- und Heizsystem (31) wenigstens einen an die Anschlüsse (15) des ersten Kühl- und Heizgeräts (33) angeschlossenen Flüssigkeitskreis (35) mit wenigstens einer Pumpe (37) eingerichtet für Zirkulation einer Flüssigkeit im Flüssigkeitskreis (35) umfasst, und
- **dass** das Kühl- und Heizsystem (31) wenigsten ein weiteres an den Flüssigkeitskreis (35) angeschlossenes Kühl- und Heizgerät (39, 41) und/oder wenigstens eine an den Flüssigkeitskreis angeschlossene Flüssigkeit-Luft-Wärmetauscher-Einheit (61, 63) umfasst.

9. Kühl- und Heizsystem (31) nach Anspruch 8 **dadurch gekennzeichnet, dass** der Flüssigkeitskreis (35) zumindest eine Flüssigkeit-Luft-Wärmetauscher-Einheit (61, 63) und dazu einen Bypass (67, 73) sowie zumindest ein Ventil (69, 75) eingerichtet zum Öffnen und zum Schließen des jeweiligen Bypasses (67, 73) umfasst, und dass zumindest eine der wenigstens einen an den Flüssigkeitskreis (35) angeschlossenen Flüssigkeit-Luft-Wärmetauscher-Einheit (61) für das Heizen von Luft ausgebildet ist.

10. Kühl- und Heizsystem (31) nach einem der Ansprüche 8 bis 9 **dadurch gekennzeichnet, dass** das an den Flüssigkeitskreis (35) angeschlossene erste Kühl- und Heizgerät (33) als eines gemäß Anspruch 5 oder 6 zwischen Kühlbetrieb und Wärmepumpenbetrieb umschaltbares ausgebildet ist und das Kühl- und Heizsystem (31) wenigstens ein weiteres an den Flüssigkeitskreis (35) angeschlossenes Kühl- und Heizgerät (39, 41) nach einem der Ansprüche 1 bis 4 sowie eine Regelung (47) umfasst, die derart ausgebildet ist, dass damit das Ein- und Ausschalten der Kältemittelkreisläufe (3) der Kühl- und Heizgeräte (33, 39, 41) sowie die Ventile des Flüssigkeitskreises (69, 71, 75, 77) einschließlich der ersten Ventile (21) und gegebenenfalls zweiten Ventile (23) der Kühl- und Heizgeräte (33, 39, 41) und das Umschalten des Kältemittelkreises (3) des ersten Kühl- und Heizgeräts (33) regelbar sind.

11. Kühl- und Heizsystem (31) nach Anspruch 10
**dadurch gekennzeichnet, dass** die Regelung (47) derart ausgebildet ist, dass damit die Leistung der elektrisch betreibbaren Verdichter (5) und/oder die Expansionsorgane (9, 25) und/oder die den Kältemittel-Luft-Wärmetauschern (11) sowie dem Flüssigkeit-Luft-Wärmetauscher (10) zugeordneten Luftfördereinrichtungen (13) der Kühl- und Heizgeräte (33, 39, 41) und/oder die Förderleistung der Pumpe (37) des Flüssigkeitskreises (35) regelbar sind.

12. Kühl- und Heizsystem (31) nach Anspruch 10 oder 11 **dadurch gekennzeichnet, dass** die Anzahl der weiteren Kühl- und Heizgeräte (39, 41) nach einem der Ansprüche 1 bis 4 mindestens zwei ist und diese weiteren Kühl- und Heizgeräte (39, 41) im Flüssigkeitskreis (35) zueinander und zum ersten Kühl- und Heizgerät (33) in Reihe geschaltet oder schaltbar sind.

13. Kühl- und Heizsystem (31) nach einem der Ansprüche 10 bis 12 **dadurch gekennzeichnet, dass** die Anzahl der weiteren Kühl- und Heizgeräte (39, 41) nach einem der Ansprüche 1 bis 4 mindestens zwei ist und diese weiteren Kühl- und Heizgeräte (39, 41) im Flüssigkeitskreis (35) zueinander parallel und zum ersten Kühl- und Heizgerät (33) jeweils in Reihe geschaltet oder schaltbar sind.

14. Kühl- und Heizsystem (31) nach einem der Ansprüche 10 bis 13 **dadurch gekennzeichnet,**
- **dass** das erste Kühl- und Heizgerät (33) ausgebildet ist, bei einem Fahrzeug derart angeordnet zu werden, dass durch den Flüssigkeit-Luft-Wärmetauscher (10) und durch den Luft-Kältemittel-Wärmetauscher (11) als Luft nur Luft von außen förderbar ist, und
- **dass** das wenigstens eine weitere Kühl- und Heizgerät (39, 41) ausgebildet ist, bei einem Fahrzeug derart angeordnet zu werden, dass durch den Flüssigkeit-Luft-Wärmetauscher (10) und durch den Luft-Kältemittel-Wärmetauscher (11) als Luft nur Luft in und/oder für wenigstens eine(m)/n Fahrzeuginnenraum förderbar ist.

15. Fahrzeug (51) **dadurch gekennzeichnet, dass** es ein Kühl- und Heizsystem (31) nach einem der Ansprüche 8 bis 14 und einen oder mehrere Temperatursensoren umfasst.

16. Fahrzeug (51) nach Anspruch 15 **dadurch gekennzeichnet, dass** das Kühl- und Heizsystem (31) wenigstens eine außen am Fahrzeug (51) angeordnete am Flüssigkeitskreis (35) angeschlossenen Flüssigkeit-Luft-Wärmetauscher-Einheit (61, 63) umfasst.

17. Fahrzeug (51) nach Anspruch 15 oder 16
**dadurch gekennzeichnet, dass** das Kühl- und Heizsystem (31) wenigstens eine in der Fahrer- und/oder Fahrgastkabine (59) angeordnete am Flüssigkeitskreis (35) angeschlossene Flüssigkeit-Luft-Wärmetauscher-Einheit (61) umfasst.

18. Fahrzeug (51) nach Anspruch 17 **dadurch gekennzeichnet, dass** in dem Kühl- und Heizsystem (31) die Luftfördereinrichtung (65) bei der in der Fahrer- und/oder Fahrgastkabine (59) angeordneten Flüssigkeit-Luft-Wärmetauscher-Einheit (61) derart umschaltbar ausgebildet ist, dass bei Betrieb in dem Fahrzeug (51) Luft aus der Fahrer- und/oder Fahrgastkabine (59) durch die Flüssigkeit-Luft-Wärmetauscher-Einheit (61) nach außen in die Umgebung strömt.

19. Fahrzeug (51) nach einem der Ansprüche 15 bis 18 **dadurch gekennzeichnet, dass** es ein Kühl- und Heizsystem (31) nach einem der Ansprüche 10 bis 14 umfasst,
wobei das erste Kühl- und Heizgerät (33) außen am Fahrzeug angeordnet ist und das/die weitere/n Kühl- und Heizgerät/e (39, 41) einzeln jeweils einem Fahrzeuginnenraum (53, 55) der ein oder mehreren Fahrzeuginnenräume (53, 55, 59) des Fahrzeugs (51) zugeordnet ist/sind.

20. Fahrzeug (51) nach einem der Ansprüche 15 bis 19 **dadurch gekennzeichnet, dass** es als ein Kühlfahrzeug ausgebildet ist und das Kühl- und Heizsystem (31) insbesondere zum Kühlen von Luft in einem oder in mehreren als Kühlraum/Kühlräume ausgebildeten Fahrzeuginnenraum/Fahrzeuginnenräumen (53, 55) eingerichtet ist.

21. Verfahren zum Steuern eines Kühl- und Heizsystems nach einem der Ansprüche 8 bis 14 bei einem Fahrzeug nach einem der Ansprüche 15 bis 20 **gekennzeichnet durch** die Schritte,
- des Ermittelns (100) eines Kühl- oder Heizbedarfs für wenigstens einen Fahrzeuginnenraum (53, 55),
- bei ermitteltem Kühlbedarf des Kühlens (120A) von Luft für und/oder in dem wenigstens einen Fahrzeuginnenraum (53, 55) mit einem Kühl- und Heizgerät (1, 33, 39, 41) nach einem der Ansprüche 1 bis 7 mithilfe dessen im Kühlbetrieb bezüglich der Luft eingeschalteten Kältemittelkreises (3),
- bei ermitteltem Heizbedarf des Heizens (130) von Luft für und/oder in dem wenigstens einen Fahrzeuginnenraum (53, 55) mit warmer **durch** den Flüssigkeit-Luft-Wärmetauscher (10) des nach einem der Ansprüche 1 bis 7 ausgebildeten Kühl- und Heizgeräts (1, 33, 39, 41) strömender Flüssigkeit des Flüssigkeitskreises (35) bei abgeschaltetem Kältemittelkreis (3) des Kühl- und Heizgeräts (1, 33, 39, 41).

22. Verfahren nach Anspruch 21 **dadurch gekennzeichnet, dass** für verschiedene mit einem Kühl- und Heizgerät (1, 33, 39, 41) versehene Fahrzeuginnenräume (53, 55) des Fahrzeugs (51) jeweils der Heiz- oder Kühlbedarf ermittelt wird und entsprechend das Kühlen und Heizen der Luft des jeweiligen Fahrzeuginnenraums (53, 55) geregelt wird.

23. Verfahren nach Anspruch 21 oder 22, wobei zumindest noch ein Kühl- und Heizgerät (1, 39, 41) an den Flüssigkeitskreis (35) des Kühl- und Heizsystems (31) angeschlossen ist, das gemäß Anspruch 5 oder 6 zwischen Kühlbetrieb und Wärmepumpenbetrieb umschaltbar ausgebildet und bei dem Fahrzeug (51) derart angeordnet ist, dass durch den Flüssigkeit-Luft-Wärmetauscher (10) und durch den Luft-Kältemittel-Wärmetauscher (11) als Luft nur Luft von außen förderbar ist, **gekennzeichnet durch** die weiteren Schritte,
- des Ermittelns (130A) der Temperatur der Außenluft, und
- des Kühlens (150A) erwärmter **durch** den Flüssigkeit-Luft-Wärmetauscher (10) des gemäß Anspruch 5 oder 6 ausgebildeten Kühl- und Heizgeräts (1, 33) strömender Flüssigkeit des Flüssigkeitskreises (35) bei abgeschaltetem Kältemittelkreis (3) des Kühl- und Heizgeräts (1, 33) bei zum Kühlen ausreichend kalter Außenluft,
- des Kühlens (150B) erwärmter **durch** den Flüssigkeit-Kältemittel-Wärmetauscher (7) des gemäß Anspruch 5 oder 6 ausgebildeten Kühl- und Heizgeräts (1, 33) strömender Flüssigkeit des Flüssigkeitskreises (35) mithilfe des im Kühlbetrieb bezüglich der Flüssigkeit geschalteten Kältemittelkreises (3) des Kühl- und Heizgeräts (1, 33) bei zum Kühlen nicht ausreichend kalter Außenluft, oder
- des Heizens (120) von **durch** den Flüssigkeit-Kältemittel-Wärmetauscher (7) des gemäß Anspruch 5 oder 6 ausgebildeten Kühl- und Heizgeräts (1, 33) strömender Flüssigkeit des Flüssigkeitskreises (35) mithilfe des im Wärmepumpenbetrieb geschalteten Kältemittelkreises (3) des Kühl- und Heizgeräts (1, 33) beim Heizen (130) von Luft für oder in zumindest einem Fahrzeuginnenraum (53, 55) mit der geheizten Flüssigkeit in einem gemäß Anspruch 21 oder 22 dafür vorgesehenen Kühl- und Heizgerät (39, 41).

24. Verfahren nach einem der Ansprüche 21 bis 23, **dadurch gekennzeichnet, dass** zum Abtauen insbesondere des Luft-Kältemittel-Wärmetauschers (11) eines in einem Fahrzeuginnenraum (53, 55) angeordneten Kühl- und Heizgeräts (39, 41) dessen zuvor zum Kühlen der Luft im Fahrzeuginnenraum (53, 55) angeschalteter Kältemittelkreis (3) ausgeschaltet, das erste Ventil (21) geöffnet sowie das zweite Ventil (23) geschlossen werden und die zuvor beim Kühlen der Luft im Fahrzeuginnenraum (53, 55) im Flüssigkeit-Kältemittel-Wärmetauscher (7) erwärmte Flüssigkeit durch den Bypass (19) gepumpt wird.

25. Verfahren nach einem der Ansprüche 21 bis 24 **dadurch gekennzeichnet, dass** bezüglich des jeweiligen Kühl- und Heizgeräts (1, 33, 39, 41) das erste Ventil (21) und gegebenenfalls das zweite Ventil (23) und das Ein- und Ausschalten sowie gegebenenfalls auch Umschalten des Kältemittelkreises (3) und/oder die Leistung des elektrisch betreibbaren Verdichters (5) und/oder das Expansionsorgan (9, 25) und/oder die dem Luft-Kältemittel-Wärmetauscher (11) sowie dem Flüssigkeit-Luft-Wärmetauscher (10) zugeordnete Luftfördereinrichtung (13) sowie bezüglich des Flüssigkeitskreises (35) dessen Ventile (69, 71, 75,77) und/oder die Förderleistung der Pumpe (37) automatisch geregelt werden.

## Claims

1. Cooling and heating device (1, 33, 39, 41) for a vehicle, wherein the cooling and heating device (1, 33, 39, 41) comprises a refrigerant circuit (3) which comprises an electrically operable compressor (5), a liquid-refrigerant heat exchanger (7) which is operable as a condenser/gas cooler, at least one expansion element (9, 25) and a single air-refrigerant heat exchanger (11), wherein said air-refrigerant heat exchanger is operable as an evaporator, and connections (15) configured to also connect the liquid-refrigerant heat exchanger (7) to a liquid circuit, **characterized**
- **in that** the cooling and heating device (1, 33, 39, 41) has a single liquid-air heat exchanger (10),
- **in that** the cooling and heating device (1, 33, 39, 41) has a bypass (19) to that region (17) of the liquid-refrigerant heat exchanger (7) which is provided for a liquid circuit and/or to a heat exchanger-free other region (16) of the liquid line (14), provided for a liquid circuit, of the cooling and heating device (1, 33, 39, 41),
- **in that** the cooling and heating device (1, 33, 39, 41) has at least a first valve (21) configured to open and close the bypass (19),
- **in that** the liquid-air heat exchanger (10) is arranged in the bypass (19), wherein the liquid-air heat exchanger (10) is configured in such a way that there heat is transferable between the liquid and the air when liquid is flowing through the bypass (19) and when air is flowing through the liquid-air heat exchanger (10), and
- **in that** the air conveying device (13) which is provided for conveying air through the air-refrigerant heat exchanger (11) is also provided for conveying air through the liquid-air heat exchanger (10), wherein the air flow path runs both through the air-refrigerant heat exchanger (11) and through the liquid-air heat exchanger (10).

2. Cooling and heating device (1, 33, 39, 41) according to Claim 1, **characterized in that** the air-refrigerant heat exchanger (11) and the liquid-air heat exchanger (10) are together in the form of a unit and are connected to one another in a heat-conducting manner via one or more heat conducting elements.

3. Cooling and heating device (1, 33, 39, 41) according to Claim 1 or 2, **characterized in that** it comprises a second valve (23) provided for blocking and permitting a liquid flow through the region (16, 17) which is bypassed by the bypass (19).

4. Cooling and heating device (1, 33, 39, 41) according to Claim 3, **characterized in that** the first valve (21) and/or the second valve (23) are/is configured in such a way that the size of their/its passage opening/openings are/is adjustable.

5. Cooling and heating device (1, 33, 39, 41) according to one of Claims 1 to 4, **characterized in that** the refrigerant circuit (3) is configured to be switchable in such a way that the liquid-refrigerant heat exchanger (7) is also operable as an evaporator and the air-refrigerant heat exchanger (11) is also operable as a condenser/gas cooler.

6. Cooling and heating device (1, 33, 39, 41) according to Claim 5, **characterized in that** the liquid-refrigerant heat exchanger (7) and/or the air-refrigerant heat exchanger (11) have/has separate refrigerant lines on the one hand for the operation as a condenser/gas cooler and on the other hand for the operation as an evaporator.

7. Cooling and heating device (1, 33, 39, 41) according to one of Claims 1 to 6, **characterized in that** it comprises a thus configured control means (47) which can be used to control the first valve (21) and/or where appropriate the second valve (23) and/or the power of the electrically operable compressor (5) and/or the activation and deactivation and, where appropriate, also switching of the refrigerant circuit (3) and/or the expansion element (9, 25) and/or the air conveying device (13) which is assigned to the refrigerant-air heat exchanger (11) and to the liquid-air heat exchanger (10).

8. Cooling and heating system (31) for a vehicle, wherein the cooling and heating system (31) comprises at least a first cooling and heating device (33) according to one of Claims 1 to 7, **characterized**
- **in that** the cooling and heating system (31) comprises at least one liquid circuit (35) which is connected to the connections (15) of the first cooling and heating device (33) and which has at least one pump (37) configured to circulate a liquid in the liquid circuit (35), and
- **in that** the cooling and heating system (31) comprises at least one further cooling and heating device (39, 41) which is connected to the liquid circuit (35) and/or at least one liquid-air heat exchanger unit (61, 63) which is connected to the liquid circuit.

9. Cooling and heating system (31) according to Claim 8, **characterized in that** the liquid circuit (35) comprises at least one liquid-air heat exchanger unit (61, 63) and, in this regard, a bypass (67, 73) and at least one valve (69, 75) configured to open and close the respective bypass (67, 73), and **in that** at least one of the at least one liquid-air heat exchanger unit (61) which is connected to the liquid circuit (35) is configured for heating air.

10. Cooling and heating system (31) according to either one of Claims 8 and 9, **characterized in that** the first cooling and heating device (33) connected to the liquid circuit (35) is in the form of a device which is switchable between cooling operation and heat pump operation according to Claim 5 or 6, and the cooling and heating system (31) comprises at least one further cooling and heating device (39, 41) according to one of Claims 1 to 4 which is connected to the liquid circuit (35), and also a control means (47) which is configured in such a way that it can be used to control the activation and deactivation of the refrigerant circuits (3) of the cooling and heating devices (33, 39, 41) and the valves of the liquid circuit (69, 71, 75, 77) including the first valves (21) and, where appropriate, second valves (23) of the cooling and heating devices (33, 39, 41) and the switching of the refrigerant circuit (3) of the first cooling and heating device (33) .

11. Cooling and heating system (31) according to Claim 10, **characterized in that** the control means (47) is configured in such a way that it can be used to control the power of the electrically operable compressor (5) and/or the expansion elements (9, 25) and/or the air conveying devices (13), which are assigned to the refrigerant-air heat exchangers (11) and to the liquid-air heat exchanger (10), of the cooling and heating devices (33, 39, 41) and/or the conveying power of the pump (37) of the liquid circuit (35).

12. Cooling and heating system (31) according to Claim 10 or 11, **characterized in that** the number of further cooling and heating devices (39, 41) according to one of Claims 1 to 4 is at least two and these further cooling and heating devices (39, 41) are connected or connectable in series with respect to one another and with respect to the first cooling and heating device (33) in the liquid circuit (35).

13. Cooling and heating system (31) according to one of Claims 10 to 12, **characterized in that** the number of further cooling and heating devices (39, 41) according to one of Claims 1 to 4 is at least two and these further cooling and heating devices (39, 41) are connected or connectable in parallel with respect to one another and in each case in series with respect to the first cooling and heating device (33).

14. Cooling and heating system (31) according to one of Claims 10 to 13, **characterized**
- **in that** the first cooling and heating device (33) is configured to be arranged in a vehicle in such a way that only air from the outside is conveyable as air through the liquid-air heat exchanger (10) and through the air-refrigerant heat exchanger (11), and
- **in that** the at least one further cooling and heating device (39, 41) is configured to be arranged in a vehicle in such a way that only air in and/or for at least one vehicle interior space is conveyable as air through the liquid-air heat exchanger (10) and through the air-refrigerant heat exchanger (11).

15. Vehicle (51), **characterized in that** it comprises a cooling and heating system (31) according to one of Claims 8 to 14 and one or more temperature sensors.

16. Vehicle (51) according to Claim 15, **characterized in that** the cooling and heating system (31) comprises at least one liquid-air heat exchanger unit (61, 63) which is arranged at the outside of the vehicle (51) and which is connected to the liquid circuit (35).

17. Vehicle (51) according to Claim 15 or 16, **characterized in that** the cooling and heating system (31) comprises at least one liquid-air heat exchanger unit (61) which is arranged in the driver and/or passenger compartment (59) and which is connected to the liquid circuit (35).

18. Vehicle (51) according to Claim 17, **characterized in that**, in the cooling and heating system (31), the air conveying device (65) in the case of the liquid-air heat exchanger unit (61) arranged in the driver and/or passenger compartment (59) is configured to be switchable in such a way that, during operation in the vehicle (51), air from the driver and/or passenger compartment (59) flows outward through the liquid-air heat exchanger unit (61) into the environment.

19. Vehicle (51) according to one of Claims 15 to 18, **characterized in that** it comprises a cooling and heating system (31) according to one of Claims 10 to 14, wherein the first cooling and heating device (33) is arranged at the outside of the vehicle and the further cooling and heating device/devices (39, 41) is/are each individually assigned to a vehicle interior space (53, 55) of the one or more vehicle interior spaces (53, 55, 59) of the vehicle (51).

20. Vehicle (51) according to one of Claims 15 to 19, **characterized in that** it is in the form of a refrigerated vehicle and the cooling and heating system (31) is in particular configured to cool air in one or in multiple vehicle interior space/vehicle interior spaces (53, 55) in the form of cooling space/cooling spaces.

21. Method for controlling a cooling and heating system according to one of Claims 8 to 14 in a vehicle according to one of Claims 15 to 20, **characterized by** the steps
- ascertaining (100) a cooling or heating requirement for at least one vehicle interior space (53, 55),
- in the event of an ascertained cooling requirement, cooling (120A) air for and/or in the at least one vehicle interior space (53, 55) by means of a cooling and heating device (1, 33, 39, 41) according to one of Claims 1 to 7 using the refrigerant circuit (3) thereof activated in cooling operation with respect to the air,
- in the event of an ascertained heating requirement, heating (130) air for and/or in the at least one vehicle interior space (53, 55) by means of hot liquid of the liquid circuit (35), said hot liquid flowing through the liquid-air heat exchanger (10) of the cooling and heating device (1, 33, 39, 41) configured according to one of Claims 1 to 7, with the refrigerant circuit (3) of the cooling and heating device (1, 33, 39, 41) deactivated.

22. Method according to Claim 21, **characterized in that**, for different vehicle interior spaces (53, 55) of the vehicle (51) which are provided with a cooling and heating device (1, 33, 39, 41), the heating or cooling requirement is in each case ascertained and the cooling and heating of the air in the respective vehicle interior space (53, 55) is controlled accordingly.

23. Method according to Claim 21 or 22, wherein at least one other cooling and heating device (1, 39, 41) is connected to the liquid circuit (35) of the cooling and heating system (31), said other cooling and heating device being configured to be switchable between cooling operation and heat pump operation according to Claim 5 or 6 and being arranged in the vehicle (51) in such a way that only air from the outside is conveyable as air through the liquid-air heat exchanger (10) and through the air-refrigerant heat exchanger (11), **characterized by** the further steps
- ascertaining (130A) the temperature of the outside air, and
- cooling (150A) heated liquid of the liquid circuit (35), said heated liquid flowing through the liquid-air heat exchanger (10) of the cooling and heating device (1, 33) configured according to Claim 5 or 6, with the refrigerant circuit (3) of the cooling and heating device (1, 33) deactivated in the case of outside air that is sufficiently cold for cooling purposes,
- cooling (150B) heated liquid of the liquid circuit (35), said heated liquid flowing through the liquid-refrigerant heat exchanger (7) of the cooling and heating device (1, 33) configured according to Claim 5 or 6, using the refrigerant circuit (3) of the cooling and heating device (1, 33), said refrigerant circuit being activated in cooling operation with respect the liquid, in the case of outside air that is not sufficiently cold for cooling purposes, or
- heating (120) liquid of the liquid circuit (35), said liquid flowing through the liquid-refrigerant heat exchanger (7) of the cooling and heating device (1, 33) configured according to Claim 5 or 6, using the refrigerant circuit (3) of the cooling and heating device (1, 33), said refrigerant circuit being activated in heat pump operation, during the heating (130) of air for or in at least one vehicle interior space (53, 55) by means of the heated liquid in a cooling and heating device (39, 41) provided for this purpose according to Claim 21 or 22.

24. Method according to one of Claims 21 to 23, **characterized in that**, in order to defrost in particular the air-refrigerant heat exchanger (11) of a cooling and heating device (39, 41) arranged in a vehicle interior space (53, 55), the refrigerant circuit (3) thereof which was previously activated for cooling of the air in the vehicle interior space (53, 55) is deactivated, the first valve (21) is opened and the second valve (23) is closed and the liquid which was previously heated in the liquid-refrigerant heat exchanger (7) during the cooling of the air in the vehicle interior space (53, 55) is pumped through the bypass (19).

25. Method according to one of Claims 21 to 24, **characterized in that**, in relation to the respective cooling and heating device (1, 33, 39, 41), the first valve (21) and, where appropriate, the second valve (23) and the activation and deactivation and, where appropriate, also switching of the refrigerant circuit (3) and/or the power of the electrically operable compressor (5) and/or the expansion element (9, 25) and/or the air conveying device (13) which is assigned to the air-refrigerant heat exchanger (11) and to the liquid-air heat exchanger (10) are automatically controlled, and, in relation to the liquid circuit (35), the valves (69, 71, 75, 77) thereof and/or the conveying power of the pump (37) are automatically controlled.

## Revendications

1. Appareil de refroidissement et de chauffage (1, 33, 39, 41) pour un véhicule, l'appareil de refroidissement et de chauffage (1, 33, 39, 41) comprenant un circuit de réfrigérant (3) qui comprend un compresseur (5) pouvant fonctionner électriquement, un échangeur de chaleur liquide-réfrigérant (7) pouvant fonctionner sous forme de condenseur/refroidisseur de gaz, au moins un organe d'expansion (9, 25) et un seul échangeur de chaleur air-réfrigérant (11) qui peut fonctionner sous forme d'évaporateur, ainsi que des raccords (15) configurés pour raccorder l'échangeur de chaleur liquide-réfrigérant (7) également à un circuit de liquide, **caractérisé en ce que**
- l'appareil de refroidissement et de chauffage (1, 33, 39, 41) présente un seul échangeur de chaleur liquide-air (10),
- l'appareil de refroidissement et de chauffage (1, 33, 39, 41) présente une dérivation (19) vers la zone (17) de l'échangeur de chaleur liquide-réfrigérant (7) prévue pour un circuit de liquide et/ou vers une autre zone (16), exempte d'échangeur de chaleur, de la conduite de liquide (14) de l'appareil de refroidissement et de chauffage (1, 33, 39, 41) prévue pour un circuit de liquide,
- l'appareil de refroidissement et de chauffage (1, 33, 39, 41) présente au moins une première soupape (21) adaptée pour ouvrir et fermer la dérivation (19),
- l'échangeur de chaleur liquide-air (10) est agencé dans la dérivation (19), l'échangeur de chaleur liquide-air (10) étant configuré de telle sorte que de la chaleur peut y être transmise entre le liquide et l'air lorsque le liquide s'écoule à travers la dérivation (19) et lorsque l'air s'écoule à travers l'échangeur de chaleur liquide-air (10), et
- l'appareil de transport d'air (13) prévu pour le transport d'air à travers l'échangeur de chaleur air-réfrigérant (11) est également prévu pour le transport d'air à travers l'échangeur de chaleur liquide-air (10), le trajet d'écoulement d'air passant à la fois à travers l'échangeur de chaleur air-réfrigérant (11) et à travers l'échangeur de chaleur liquide-air (10).

2. Appareil de refroidissement et de chauffage (1, 33, 39, 41) selon la revendication 1, **caractérisé en ce que** l'échangeur de chaleur air-réfrigérant (11) et l'échangeur de chaleur liquide-air (10) sont configurés ensemble sous la forme d'une unité et sont reliés entre eux de manière thermoconductrice par un ou plusieurs éléments thermoconducteurs.

3. Appareil de refroidissement et de chauffage (1, 33, 39, 41) selon la revendication 1 ou 2, **caractérisé en ce qu'**il comprend une deuxième soupape (23) prévue pour bloquer et autoriser l'écoulement de liquide à travers la zone (16, 17) contournée par la dérivation (19) .

4. Appareil de refroidissement et de chauffage (1, 33, 39, 41) selon la revendication 3, **caractérisé en ce que** la première soupape (21) et/ou la deuxième soupape (23) sont configurées de telle sorte que la taille de leurs ouvertures de passage est réglable.

5. Appareil de refroidissement et de chauffage (1, 33, 39, 41) selon l'une quelconque des revendications 1 à 4, **caractérisé en ce que** le circuit de réfrigérant (3) est configuré sous forme commutable de telle sorte que l'échangeur de chaleur liquide-réfrigérant (7) peut également fonctionner sous forme d'évaporateur et que l'échangeur de chaleur air-réfrigérant (11) peut également fonctionner sous forme de condenseur/refroidisseur de gaz.

6. Appareil de refroidissement et de chauffage (1, 33, 39, 41) selon la revendication 5, **caractérisé en ce que** l'échangeur de chaleur liquide-réfrigérant (7) et/ou l'échangeur de chaleur air-réfrigérant (11) présentent des conduites de réfrigérant séparées, d'une part pour le fonctionnement sous forme de condenseur/refroidisseur de gaz et d'autre part pour le fonctionnement sous forme d'évaporateur.

7. Appareil de refroidissement et de chauffage (1, 33, 39, 41) selon l'une quelconque des revendications 1 à 6, **caractérisé en ce qu'**il comprend une régulation (47) configurée de telle sorte que la première soupape (21) et/ou éventuellement la deuxième soupape (23) et/ou la puissance du compresseur (5) pouvant fonctionner électriquement et/ou la mise en marche et l'arrêt ainsi qu'éventuellement la commutation du circuit de réfrigérant (3) et/ou l'organe d'expansion (9, 25) et/ou l'appareil de transport d'air (13) associé à l'échangeur de chaleur réfrigérant-air (11) ainsi qu'à l'échangeur de chaleur liquide-air (10) sont réglables.

8. Système de refroidissement et de chauffage (31) pour un véhicule, le système de refroidissement et de chauffage (31) comprenant au moins un premier appareil de refroidissement et de chauffage (33) selon l'une quelconque des revendications 1 à 7, **caractérisé en ce que**
- le système de refroidissement et de chauffage (31) comprend au moins un circuit de liquide (35) raccordé aux raccords (15) du premier appareil de refroidissement et de chauffage (33), avec au moins une pompe (37) adaptée pour faire circuler un liquide dans le circuit de liquide (35), et
- le système de refroidissement et de chauffage (31) comprend au moins un autre appareil de refroidissement et de chauffage (39, 41) raccordé au circuit de liquide (35) et/ou au moins une unité d'échangeur de chaleur liquide-air (61, 63) raccordée au circuit de liquide.

9. Système de refroidissement et de chauffage (31) selon la revendication 8, **caractérisé en ce que** le circuit de liquide (35) comprend au moins une unité d'échangeur de chaleur liquide-air (61, 63) et une dérivation (67, 73) pour celle-ci, ainsi qu'au moins une soupape (69, 75) adaptée pour ouvrir et fermer la dérivation respective (67, 73), et **en ce qu'**au moins l'une des au moins une unité d'échangeur de chaleur liquide-air (61) raccordée au circuit de liquide (35) est configurée pour chauffer l'air.

10. Système de refroidissement et de chauffage (31) selon l'une quelconque des revendications 8 à 9, **caractérisé en ce que** le premier appareil de refroidissement et de chauffage (33) raccordé au circuit de liquide (35) est configuré sous la forme d'un appareil commutable entre le mode de refroidissement et le mode de pompe à chaleur selon la revendication 5 ou 6, et le système de refroidissement et de chauffage (31) comprend au moins un autre appareil de refroidissement et de chauffage (39, 41) selon l'une quelconque des revendications 1 à 4 raccordé au circuit de liquide (35), ainsi qu'une régulation (47), qui est configurée de telle sorte qu'elle permet de régler la mise en marche et l'arrêt des circuits de réfrigérants (3) des appareils de refroidissement et de chauffage (33, 39, 41) ainsi que les soupapes du circuit de liquide (69, 71, 75, 77), y compris les premières soupapes (21) et éventuellement les deuxièmes soupapes (23) des appareils de refroidissement et de chauffage (33, 39, 41), et la commutation du circuit de réfrigérant (3) du premier appareil de refroidissement et de chauffage (33).

11. Système de refroidissement et de chauffage (31) selon la revendication 10, **caractérisé en ce que** la régulation (47) est configurée de telle sorte qu'elle permet de régler la puissance des compresseurs (5) pouvant fonctionner électriquement et/ou les organes d'expansion (9, 25) et/ou les appareils de transport d'air (13) des appareils de refroidissement et de chauffage (33, 39, 41) associés aux échangeurs de chaleur réfrigérant-air (11) ainsi qu'à l'échangeur de chaleur liquide-air (10) et/ou la puissance de transport de la pompe (37) du circuit de liquide (35).

12. Système de refroidissement et de chauffage (31) selon la revendication 10 ou 11, **caractérisé en ce que** le nombre des autres appareils de refroidissement et de chauffage (39, 41) selon l'une quelconque des revendications 1 à 4 est d'au moins deux et ces autres appareils de refroidissement et de chauffage (39, 41) sont connectés ou peuvent être connectés dans le circuit de liquide (35) en série les uns par rapport aux autres et par rapport au premier appareil de refroidissement et de chauffage (33).

13. Système de refroidissement et de chauffage (31) selon l'une quelconque des revendications 10 à 12, **caractérisé en ce que** le nombre des autres appareils de refroidissement et de chauffage (39, 41) selon l'une quelconque des revendications 1 à 4 est d'au moins deux et ces autres appareils de refroidissement et de chauffage (39, 41) sont connectés ou peuvent être connectés dans le circuit de liquide (35) en parallèle les uns par rapport aux autres et en série par rapport au premier appareil de refroidissement et de chauffage (33) .

14. Système de refroidissement et de chauffage (31) selon l'une quelconque des revendications 10 à 13, **caractérisé en ce que**
- le premier appareil de refroidissement et de chauffage (33) est configuré pour être agencé dans un véhicule de telle sorte qu'en tant qu'air, seul de l'air provenant de l'extérieur peut être transporté à travers l'échangeur de chaleur liquide-air (10) et à travers l'échangeur de chaleur air-réfrigérant (11), et
- l'au moins un autre appareil de refroidissement et de chauffage (39, 41) est configuré pour être agencé dans un véhicule de telle sorte qu'en tant qu'air, seul de l'air dans et/ou pour au moins un habitacle de véhicule peut être transporté à travers l'échangeur de chaleur liquide-air (10) et à travers l'échangeur de chaleur air-réfrigérant (11).

15. Véhicule (51), **caractérisé en ce qu'**il comprend un système de refroidissement et de chauffage (31) selon l'une quelconque des revendications 8 à 14 et un ou plusieurs capteurs de température.

16. Véhicule (51) selon la revendication 15, **caractérisé en ce que** le système de refroidissement et de chauffage (31) comprend au moins une unité d'échangeur de chaleur liquide-air (61, 63) agencée à l'extérieur sur le véhicule (51), raccordée au circuit de liquide (35).

17. Véhicule (51) selon la revendication 15 ou 16, **caractérisé en ce que** le système de refroidissement et de chauffage (31) comprend au moins une unité de d'échangeur de chaleur liquide-air (61) agencée dans la cabine du conducteur et/ou des passagers (59), raccordée au circuit de liquide (35).

18. Véhicule (51) selon la revendication 17, **caractérisé en ce que**, dans le système de refroidissement et de chauffage (31), l'appareil de transport d'air (65) est configuré sous forme commutable lorsque l'unité d'échangeur de chaleur liquide-air (61) est agencée dans la cabine du conducteur et/ou des passagers (59), de telle sorte que, lors du fonctionnement dans le véhicule (51), l'air provenant de la cabine du conducteur et/ou des passagers (59) s'écoule vers l'extérieur dans l'environnement à travers l'unité d'échangeur de chaleur liquide-air (61).

19. Véhicule (51) selon l'une quelconque des revendications 15 à 18, **caractérisé en ce qu'**il comprend un système de refroidissement et de chauffage (31) selon l'une quelconque des revendications 10 à 14, le premier appareil de refroidissement et de chauffage (33) étant agencé à l'extérieur sur le véhicule et le ou les autres appareils de refroidissement et de chauffage (39, 41) étant associés individuellement chacun à un habitacle de véhicule (53, 55) parmi les un ou plusieurs habitacles de véhicule (53, 55, 59) du véhicule (51).

20. Véhicule (51) selon l'une quelconque des revendications 15 à 19, **caractérisé en ce qu'**il est configuré sous la forme d'un véhicule frigorifique et le système de refroidissement et de chauffage (31) est notamment adapté pour refroidir l'air dans un ou plusieurs habitacles de véhicule (53, 55) configurés sous la forme d'un ou de plusieurs habitacles frigorifiques.

21. Procédé de commande d'un système de refroidissement et de chauffage selon l'une quelconque des revendications 8 à 14 pour un véhicule selon l'une quelconque des revendications 15 à 20, **caractérisé par** les étapes suivantes,
- la détermination (100) d'une demande de refroidissement ou de chauffage pour au moins un habitacle de véhicule (53, 55),
- lorsqu'une demande de refroidissement est déterminée, le refroidissement (120A) d'air pour et/ou dans l'au moins un habitacle de véhicule (53, 55) avec un appareil de refroidissement et de chauffage (1, 33, 39, 41) selon l'une quelconque des revendications 1 à 7, à l'aide de son circuit de réfrigérant (3) mis en marche en mode de refroidissement au regard de l'air,
- lorsqu'une demande de chauffage est déterminée, le chauffage (130) d'air pour et/ou dans l'au moins un habitacle de véhicule (53, 55) avec du liquide chaud du circuit de liquide (35) s'écoulant à travers l'échangeur de chaleur liquide-air (10) de l'appareil de refroidissement et de chauffage (1, 33, 39, 41) configuré selon l'une quelconque des revendications 1 à 7 alors que le circuit de réfrigérant (3) de l'appareil de refroidissement et de chauffage (1, 33, 39, 41) est arrêté.

22. Procédé selon la revendication 21, **caractérisé en ce que**, pour différents habitacles de véhicule (53, 55) du véhicule (51) pourvus d'un appareil de refroidissement et de chauffage (1, 33, 39, 41), la demande de chauffage ou de refroidissement est déterminée respectivement et le refroidissement et le chauffage de l'air de l'habitacle de véhicule (53, 55) respectif est réglé en conséquence.

23. Procédé selon la revendication 21 ou 22, au moins encore un appareil de refroidissement et de chauffage (1, 39, 41) étant raccordé au circuit de liquide (35) du système de refroidissement et de chauffage (31), lequel est configuré sous forme commutable entre le mode de refroidissement et le mode de pompe à chaleur selon la revendication 5 ou 6 et est agencé dans le véhicule (51) de telle sorte qu'en tant qu'air, seul de l'air provenant de l'extérieur peut être transporté à travers l'échangeur de chaleur liquide-air (10) et à travers l'échangeur de chaleur air-réfrigérant (11), **caractérisé par** les étapes supplémentaires suivantes,
- la détermination (130A) de la température de l'air extérieur, et
- le refroidissement (150A) du liquide chauffé du circuit de liquide (35) s'écoulant à travers l'échangeur de chaleur liquide-air (10) de l'appareil de refroidissement et de chauffage (1, 33) configuré selon la revendication 5 ou 6 alors que le circuit de réfrigérant (3) de l'appareil de refroidissement et de chauffage (1, 33) est arrêté, lorsque l'air extérieur est suffisamment froid pour le refroidissement,
- le refroidissement (150B) du liquide chauffé du circuit de liquide (35) s'écoulant à travers l'échangeur de chaleur liquide-réfrigérant (7) de l'appareil de refroidissement et de chauffage (1, 33) configuré selon la revendication 5 ou 6 à l'aide du circuit de réfrigérant (3) de l'appareil de refroidissement et de chauffage (1, 33) connecté en mode de refroidissement au regard du liquide, lorsque l'air extérieur n'est pas suffisamment froid pour le refroidissement, ou
- le chauffage (120) du liquide du circuit de liquide (35) s'écoulant à travers l'échangeur de chaleur liquide-réfrigérant (7) de l'appareil de refroidissement et de chauffage (1, 33) configuré selon la revendication 5 ou 6 à l'aide du circuit de réfrigérant (3) de l'appareil de refroidissement et de chauffage (1, 33) connecté en mode de pompe à chaleur lors du chauffage (130) d'air pour ou dans au moins un habitacle de véhicule (53, 55) avec le liquide chauffé dans un appareil de refroidissement et de chauffage (39, 41) prévu à cet effet selon la revendication 21 ou 22.

24. Procédé selon l'une quelconque des revendications 21 à 23, **caractérisé en ce que**, pour dégivrer notamment l'échangeur de chaleur air-réfrigérant (11) d'un appareil de refroidissement et de chauffage (39, 41) agencé dans un habitacle de véhicule (53, 55), son circuit de réfrigérant (3) préalablement mis en marche pour le refroidissement de l'air dans l'habitacle de véhicule (53, 55) est arrêté, la première soupape (21) est ouverte et la deuxième soupape (23) est fermée, et le liquide préalablement chauffé dans l'échangeur de chaleur liquide-réfrigérant (7) lors du refroidissement de l'air dans l'habitacle de véhicule (53, 55) est pompé à travers la dérivation (19).

25. Procédé selon l'une quelconque des revendications 21 à 24, **caractérisé en ce qu'**en ce qui concerne l'appareil de refroidissement et de chauffage respectif (1, 33, 39, 41), la première soupape (21) et éventuellement la deuxième soupape (23) et la mise en marche et l'arrêt ainsi qu'éventuellement aussi la commutation du circuit de réfrigérant (3) et/ou la puissance du compresseur (5) pouvant fonctionner électriquement et/ou l'organe d'expansion (9, 25) et/ou l'appareil de transport d'air (13) associé à l'échangeur de chaleur air-réfrigérant (11) ainsi qu'à l'échangeur de chaleur liquide-air (10) et, en ce qui concerne le circuit de liquide (35), ses soupapes (69, 71, 75, 77) et/ou la puissance de transport de la pompe (37) sont réglés automatiquement.
